# EUROPEAN PATENT APPLICATION

(11) **EP 2 752 647 A1**
(43) Date of publication of application: **09.07.2014**
(21) Application number: 14150120.5
(22) Date of filing: 03.01.2014
(51) Int. Cl.: G01J 3/26, G01J 3/50, G01J 3/51, G01J 3/02

(54) **Spectroscopic measurement device, color management system, and method of generating profile**

(30) Priority: 07.01.2013 JP 2013000361
(71) Applicant: Seiko Epson Corporation, Tokyo 163 (JP)
(72) Inventor: Sano, Akira, Nagano 392-8502 (JP)
(74) Representative: HOFFMANN EITLE

(57) **Abstract**

A spectroscopic measurement device includes a variable wavelength interference filter, an imaging section (an imaging element and a light intensity acquisition section) adapted to image the light dispersed by the variable wavelength interference filter to obtain a spectral image, and a data output section (a storage section and a communication section) adapted to output profile-generating data used to generate a profile of an image display device, and the data output section outputs measurement data, which includes light intensity in each pixel of each of the spectral images and a coordinate value of the pixel associated with each other, as profile-generating data in a case in which the imaging section obtains the spectral images with respect to a color pattern including a plurality of colors of color patches output from the image display device.

## Description

### BACKGROUND

### 1. Technical Field

The present invention relates to a spectroscopic measurement device, a color management system, and a method of generating a profile.

### 2. Related Art

As an image display device, there have been familiarized a variety of types of displays for displaying an image on a display, and printing devices for drawing an image on a medium such as paper to thereby display the image. There has been known a technology of measuring colors of a predetermined color pattern to thereby generate a profile of such a variety of types of image display devices in order to perform color matching of the image display device, or color matching between the plurality of image display devices (see e.g., JP-A-2000-203094 (Document 1)).

In Document 1, a color chart (a color pattern) including a plurality of colors of patches (color patches) is drawn in each of printing machines and printers, then each of the color patterns is measured by a colorimeter to thereby obtain colorimetric value data of XYZ (stimulus values), and then the profiles of the printing machines and the printers are generated based on these colorimetric values.

Further, in JP-A-2000-283852 (Document 2), there is described the fact that the color measurement is performed on the color patches color by color by translating a head of a colorimetric device with respect to a sample medium (a color pattern) having a plurality of color patches arranged.

Further, a colorimeter, which can be translated in upper, lower, right, and left directions using a drive unit, and measures the colors displayed in respective portions on the display screen color by color, is also described in JP-A-2000-99305 (Document 3).

As also described in Document 1, in the case of generating an accurate profile, an extensive colorimetric process needs to be performed. For example, as shown in Documents 2 and 3, there is exemplified a process of performing scanning with a reading section of the colorimetric device to thereby measure the colors one by one. However, there is a problem that a lot of time is required to accurately measure the colors of all of a number of color patches.

### SUMMARY

An advantage of some aspects of the invention is to provide a spectroscopic measurement device, a color management system, and a method of generating the profile each capable of achieving reduction of time necessary for measuring the colors of the color patterns including a number of color patches.

An aspect of the invention is directed to a spectroscopic measurement device including a spectral filter adapted to disperse incident light to select light with a predetermined wavelength, and capable of changing the wavelength of the light to be selected, an imaging section adapted to image the light dispersed by the spectral filter to obtain a spectral image, and a data output section adapted to output profile-generating data used to generate a profile of an image output device, and in a case in which the imaging section obtains a plurality of spectral images with respect to a color pattern including a plurality of colors of color patches output from the image output device, the data output section outputs measurement data, which includes light intensity in each pixel of each of the spectral images and a coordinate value of the pixel associated with each other, as the profile-generating data.

In this aspect of the invention, the light from the color pattern including a plurality of colors of color patches disposed in the imaging area of the imaging section is made to enter the spectral filter, and the light dispersed through the spectral filter is imaged by the imaging section to thereby obtain the spectral image. Then, the measurement data having the spectral image and the pixel positions thus received associated with each other is output as the profile-generating data.

Thus, a number of color patches can simultaneously be measured, and reduction of the time necessary for the measurement can be achieved. Further, since there is no need to scan the color pattern with the imaging section when performing the measurement, it is not required to dispose the translation device for translating the imaging section, and thus, simplification and miniaturization of the device can be achieved.

In the spectroscopic measurement device according to the aspect of the invention described above, it is preferable that the spectral filter is a variable wavelength interference filter including a first reflecting film adapted to reflect a part of incident light and transmit a part of the incident light, and a second reflecting film disposed so as to be opposed to the first reflecting film, and adapted to reflect a part of the incident light and transmit a part of the incident light, and adapted to make the incident light between the first reflecting film and the second reflecting film interfere with each other to take out the light with a specified wavelength.

According to this configuration, the spectral filter is formed of the variable wavelength interference filter, which is a variable wavelength etalon (a variable wavelength Fabry-Perot etalon) for making the incident light entering the space between the first reflecting film and the second reflecting film interfere with each other to thereby transmit the light with a specific wavelength. Such a variable wavelength interference filter can be miniaturized compared to the spectroscopic element such as an acousto-optic tunable filter (AOTF) or a liquid crystal tunable filter (LCTF), and can easily be incorporated into the spectroscopic measurement device.

In the spectroscopic measurement device according to the aspect of the invention described above, it is preferable that the variable wavelength interference filter includes a first substrate provided with the first reflecting film, a second substrate opposed to the first substrate, and provided with the second reflecting film, and a gap changing section adapted to change a gap dimension between the first reflecting film and the second reflecting film.

Although it is also possible to use a variable wavelength etalon, which is formed by, for example, forming a first reflecting film on one surface of a sacrifice layer having a plate-like shape, forming a second reflecting film on the other surface, and then removing the sacrifice layer by etching or the like, as the variable wavelength interference filter described above, a deflection might be caused in the first reflecting film and the second reflecting film in some cases. In contrast, according to the configuration described above, since the configuration is formed by disposing the first reflecting film on the first substrate, and disposing the second reflecting film on the second reflecting substrate, the deflection and the tilt of the reflecting films can be suppressed.

In the spectroscopic measurement device according to the aspect of the invention described above, it is preferable that the spectral filter includes a first substrate, a second substrate opposed to the first substrate, a first reflecting film provided to the first substrate, and adapted to reflect a part of incident light and transmit a part of the incident light, a second reflecting film provided to the second substrate, opposed to the first reflecting film, and adapted to reflect a part of the incident light and transmit a part of the incident light, and a gap changing section adapted to deflect the second substrate toward the first substrate by applying a voltage to thereby change a gap dimension between the first reflecting film and the second reflecting film.

According to this configuration, the variable wavelength Fabry-Perot etalon is used as the spectral filter, wherein the variable wavelength interference filter is capable of taking out the light with a wavelength corresponding to the gap dimension between the first reflecting film provided to the first substrate and the second reflecting film provided to the second substrate.

Thus, it is possible to take out the lights with a plurality of wavelengths in a short period of time by driving the gap changing section to vary the gap dimension, and thus, the reduction of the time necessary for the colorimetry of the color patterns can be achieved. Further, the Fabry-Perot etalon can be miniaturized compared to the case of using, for example, AOTF or LCTF, and therefore the miniaturization of the spectroscopic measurement device can be achieved.

In the spectroscopic measurement device according to the aspect of the invention described above, it is preferable that the spectroscopic measurement device further includes an incident light acquisition section adapted to take in the incident light, and a pressure-contact section disposed so as to surround the incident light acquisition section, and adapted to block outside light when pressed against a display surface on which the color pattern is displayed.

In this configuration, the pressure-contact section having a light blocking property is disposed so as to surround the incident light acquisition section of the spectroscopic measurement device, and by pressing the pressure-contact section against the display surface, on which the color patterns are displayed, to make the pressure-contact section adhere to the display surface, it is possible to inhibit the outside light from mixing therein to thereby improve the colorimetric accuracy.

It should be noted that the pressure-contact section is preferably formed of an elastic member. Thus, it is possible to make the pressure-contact section surely adhere to the display target.

In the spectroscopic measurement device according to the aspect of the invention described above, it is preferable that the pressure-contact section has a surface provided with an antireflection property and a light blocking property. Thus, it is possible to inhibit the incident light from being reflected by the surface, to suppress an influence of the reflected light on the colorimetry, and to inhibit entry of the outside light other than the measurement target light.

In the spectroscopic measurement device according to the aspect of the invention described above, it is preferable that the spectroscopic measurement device further includes a light source disposed inside the pressure-contact section, and adapted to emit light to the display surface.

According to this configuration, it is possible to perform the measurement by emitting the white light from the light source disposed inside the pressure-contact section to the color pattern even in the case in which the colorimetric target does not emit light as in the case of the color pattern drawn on a medium such as paper.

In the spectroscopic measurement device according to the aspect of the invention described above, it is preferable that the spectroscopic measurement device further includes a telecentric optical system adapted to guide the incident light to the spectral filter.

According to this configuration, since the telecentric optical system is provided, the incident light can be guided in the direction perpendicular to the spectral filter, and the miniaturization of the device can be achieved. In particular, in the case of using the variable wavelength interference filter as the spectral filter, it is necessary to guide the incident light so as to be perpendicular to each of the reflecting films. Therefore, by providing the telecentric optical system, a spectroscopic measurement device capable of performing high-speed and highly accurate integral-field spectroscopy and achieving the miniaturization can be provided.

In the spectroscopic measurement device according to the aspect of the invention described above, it is preferable that the imaging section images each of the color patches with a plurality of pixels.

In this configuration, the light from one of the color patches is received (imaged) using a plurality of pixels of the imaging element. Thus, the variation in color reproducibility between dots and the pixels in the image display device and the variation in light receiving sensitivity of the imaging element can be averaged, and the S/N ratio can be improved.

In the spectroscopic measurement device according to the aspect of the invention described above, it is preferable that the spectroscopic measurement device further includes an informing section adapted to inform of a notice including at least either one of an operation state and a measurement result.

In this configuration, the user is notified of the operation state of the spectroscopic measurement device, the measurement result, and the like by the informing section. Thus, the user can easily figure out the operation state of the spectroscopic measurement device and the measurement result. It should be noted that as the informing section, there can be cited, for example, a display section for outputting the notification as an image, or a sound output section for outputting the notification as a sound.

Another aspect of the invention is directed to a color management system including a spectroscopic measurement device including a spectral filter adapted to disperse incident light to select light with a predetermined wavelength, and capable of changing the wavelength of the light to be selected, an imaging section adapted to image the light dispersed by the spectral filter to obtain a spectral image, and a data output section adapted to output measurement data, which includes light intensity in each pixel of each of a plurality of spectral images and a coordinate value of the pixel associated with each other, as profile-generating data in a case in which the imaging section obtains the spectral images with respect to a color pattern including a plurality of colors of color patches output from an image output device, and a profile generation device having a profile generation section adapted to generate a profile of the image output device using the profile-generating data output from the spectroscopic measurement device.

In this configuration, the spectroscopic measurement device outputs the measurement data as described above to the profile generation device as the profile-generating data, and the profile generation device generates the profile of the image output device using the profile-generating data.

Thus, a number of color patches can simultaneously be measured, and reduction of the time necessary for the measurement and the generation of the profile can be achieved. Further, since the spectroscopic measurement device is not required to scan the color pattern with the imaging section when performing the measurement, it is not required to dispose the translation device for translating the imaging section, simplification and miniaturization of the spectroscopic measurement device can be achieved, and thus, simplification and miniaturization of the color management system can be achieved.

Further, since such measurement data as described above is accurate spectrum data of the image output from the image output device, the profile generation device can generate the profile with high color reproducibility with respect to the original image using such measurement data. Further, as described above, since the colorimetric process in the spectroscopic measurement device can promptly be performed, the time necessary to generate the profile can also be reduced.

In the color management system according to the aspect of the invention described above, it is preferable that the profile generation device includes a pattern output unit adapted to make the image output device output the color pattern, and the pattern output unit makes the image output device output the color pattern having the color patches each having a predetermined size arranged in a matrix.

In this configuration, since the color patches are arranged in a matrix, the positions of the color patches in the color pattern can easily be identified.

In the color management system according to the aspect of the invention described above, it is preferable that the pattern output unit makes the image output device output the color pattern in which a reference color is displayed between the plurality of color patches, and the spectroscopic measurement device identifies a pixel position of the reference color of the spectral image and a pixel position of the color patch, and outputs the profile-generating data taking the measurement data at the pixel position of the reference color identified as a reference.

In this configuration, the color pattern having the reference color (e.g., white) displayed between the color patches is imaged to obtain the measurement data based on the reference color and the measurement data based on the color patches, and then the profile-generating data taking the measurement data based on the reference color as a reference is output. For example, it is possible to output the colorimetric result of the color patch as the relative value taking the measurement value of the reference color as a reference, and by outputting such a relative value, the profile best suited to the image display device can accurately be generated. Further, in this configuration, since the spectral image of the color pattern is obtained, by using the reference color adjacent to the color patch, the influence of the in-plane characteristic (e.g., characteristic difference between the pixels of the imaging element, the variation in gap dimension between the reflecting films in the Fabry-Perot etalon, and the variation in thickness of the reflecting films) is difficult to be exerted. Therefore, in the configuration in which the spectral images obtained by integral-field spectroscopy are imaged, the improvement in measurement accuracy can be achieved.

In the color management system according to the aspect of the invention described above, it is preferable that the pattern output unit makes the image output device output the color pattern having a black line disposed between the color patches.

In this configuration, by imaging the color pattern having the black lines displayed between the color patches, it is possible to separate the lights from the color patches adjacent to each other, it is possible to prevent the light from a certain color patch from interfering with the light from the adjacent color patch to thereby suppress degradation of the colorimetric accuracy, and improve the colorimetric accuracy.

In the color management system according to the aspect of the invention described above, it is preferable that the pattern output unit makes the image output device display a reference color image having the reference color disposed in an entire display area of the color pattern before outputting the color pattern, and the spectroscopic measurement device outputs the profile-generating data taking the measurement data of the reference color image as a reference.

In this configuration, the profile-generating data taking the measurement data based on the reference color as a reference is output. Thus, similarly to the above configuration, the color difference between the reference color and each of the color patches can easily be calculated, and thus the colorimetric accuracy can be improved.

In the color management system according to the aspect of the invention described above, it is preferable that the spectroscopic measurement device includes a reference color image detection unit adapted to detect the reference color image, and starts measurement taking a fact that the reference color image is detected as a trigger.

In this configuration, the spectroscopic measurement device starts the colorimetric process in response to the detection of the reference color. Thus, it is unnecessary to instruct the spectroscopic measurement device to start the measurement in accordance with the display timing of the color pattern. Therefore, since it is not required to synchronize the timing by connecting the image output device and the spectroscopic measurement device directly or via a control device such as a PC, nor to perform an operation of starting the colorimetry by the user, it is possible to generate the profile by such a simple operation as to dispose the spectroscopic measurement device at the display position of the color patterns, and to instruct the image display device to display the color patterns.

In the color management system according to the aspect of the invention described above, it is preferable that the pattern output unit makes the image output device display an identification image adapted to instruct to start the measurement in the spectroscopic measurement device before outputting the color pattern, and the spectroscopic measurement device includes an identification image detection unit adapted to detect the identification image, and starts measurement taking a fact that the identification image is detected as a trigger.

In this configuration, by making the image output device display the color pattern after making the image output device display the identification display, it becomes unnecessary to instruct the spectroscopic measurement device to start the measurement in sync with the display timing of the color pattern of the image output device. Therefore, since it is not required to synchronize the timing by connecting the image output device and the spectroscopic measurement device directly or via a control device such as a PC, nor to perform an operation of starting the colorimetry by the user, it is possible for the user to generate the profile by such a simple operation as to dispose the spectroscopic measurement device at the display position of the color patterns, and to instruct the image display device to display the color patterns.

In the color management system according to the aspect of the invention described above, it is preferable that the pattern output unit makes the image output device output an indication image adapted to indicate an arrangement position of the spectroscopic measurement device.

In this configuration, by making the image display device display the indication image for indicating the arrangement position of the spectroscopic measurement device, it becomes easy to dispose the spectroscopic measurement device at the position where the imaging area of the spectroscopic measurement device and the display area of the color pattern overlap each other, and thus, highly accurate colorimetry can easily be performed.

In the color management system according to the aspect of the invention described above, it is preferable that the pattern output unit makes the image output device sequentially output a plurality of color patterns different in arrangement positions of the color patches from each other.

In some cases, the image display device might have a variation in color reproducibility between the display positions. Further, in some cases, the light receiving section might have a variation in light receiving sensitivity between the light receiving positions. Therefore, by displaying the same color at different display positions, and receiving the same color by the light receiving elements at different pixel positions, there can be obtained the profile-generating data in which the variation in color reproducibility between the display positions of the image display device and the variation in light receiving sensitivity between the light receiving positions of the light receiving section are averaged, and thus, the S/N ratio can be improved.

In the color management system according to the aspect of the invention described above, it is preferable that the pattern output unit makes the image output device sequentially output a plurality of color patterns different in colors of the color patches from each other.

In this configuration, the image display device is made to sequentially display a plurality of color patterns different in colors of the color patches from each other, and the profile is generated using the profile-generating data obtained by performing the colorimetry on the plurality of color patterns. Thus, it is possible to perform the colorimetry on the color patches with a larger number of colors than in the case of performing the colorimetry on a single color pattern, and improvement of the colorimetric accuracy can be achieved.

Still another aspect of the invention is directed to a method of generating a profile in a color management system including providing the color management system with a spectroscopic measurement device and a profile generation device, the spectroscopic measurement device including a spectral filter adapted to disperse incident light to select light with a predetermined wavelength, and capable of changing the wavelength of the light to be selected, and an imaging section adapted to image the light dispersed by the spectral filter to obtain a spectral image, and the profile generation device generating the profile of an image output device, imaging, by the imaging section, a color pattern including a plurality of colors of color patches output from the image output device while changing the wavelength of the light to be selected by the spectral filter, to thereby obtain a plurality of spectral images with respective wavelengths, outputting measurement data, which includes light intensity in each pixel of each of the spectral images and a coordinate value of the pixel associated with each other, as profile-generating data, and generating the profile of the image output device using the profile-generating data.

In this aspect of the invention, there are executed the steps of imaging, by the imaging section, a color pattern including a plurality of colors of color patches output from the image output device while changing the wavelength of the light to be dispersed by the spectral filter, to thereby obtain a plurality of spectral images with respective wavelengths, outputting measurement data, which includes light intensity in each pixel of each of the spectral images and a coordinate value of the pixel associated with each other, as profile-generating data, and generating the profile of the image output device using the profile-generating data.

Thus, a number of color patches can simultaneously be measured without scanning the color pattern with the imaging section when performing the measurement, and reduction of the time necessary for the measurement can be achieved.

### BRIEF DESCRIPTION OF THE DRAWINGS

The invention will be described with reference to the accompanying drawings, wherein like numbers reference like elements.
Fig. 1 is a block diagram showing a schematic configuration of a color management system according to a first embodiment of the invention.
Fig. 2 shows diagrams for explaining measurement target images of the first embodiment.
Fig. 3 is a cross-sectional view showing a schematic configuration of a spectroscopic measurement device according to the first embodiment of the invention.
Fig. 4 is a cross-sectional view showing a schematic configuration of a variable wavelength interference filter.
Fig. 5 is a diagram for explaining a notification image displayed on a display section of the spectroscopic measurement device.
Fig. 6 is a flowchart showing a process of the color management system.
Fig. 7 is a front view for explaining a display configuration of an image display device.
Fig. 8 is a front view for explaining a method of arranging the image display device and the spectroscopic measurement device.
Fig. 9 is a flowchart showing a colorimetric process shown in Fig. 6.
Fig. 10 shows diagrams for explaining measurement target images of a second embodiment.
Fig. 11 is a block diagram showing a schematic configuration of a modified example of the color management system.
Fig. 12 is a block diagram showing a schematic configuration of a modified example of the color management system.
Fig. 13 is a diagram showing a modified example of the spectroscopic measurement device according to the invention.

### DESCRIPTION OF EXEMPLARY EMBODIMENTS

### First Embodiment

A first embodiment of the invention will hereinafter be explained with reference to the accompanying drawings.

### Configuration of Color Management System

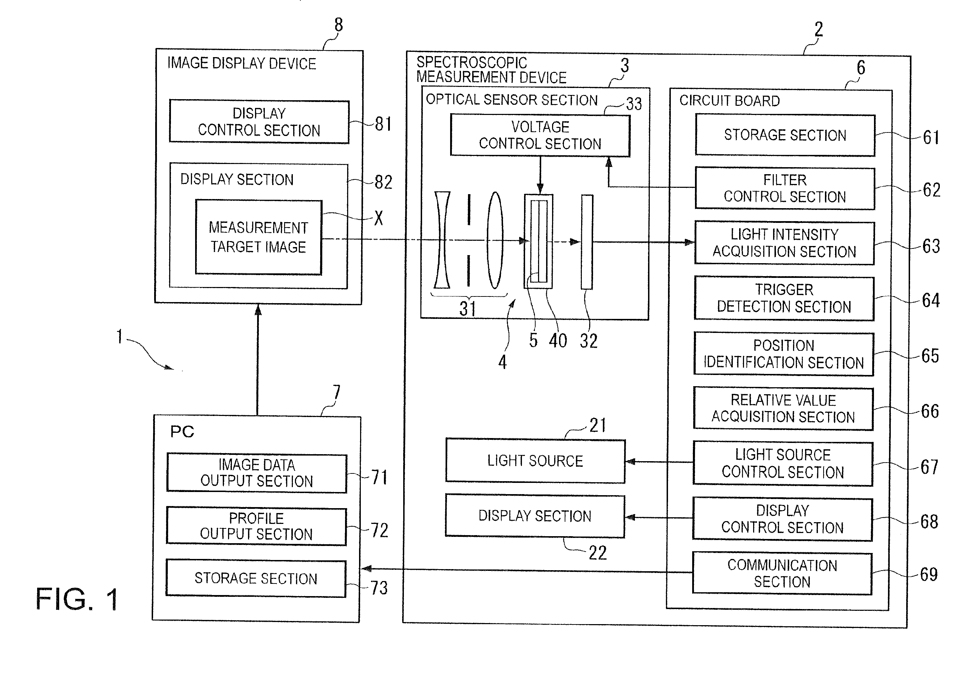

Fig. 1 is a block diagram showing a schematic configuration of a color management system 1 according to the first embodiment of the invention.

The color management system 1 is provided with a spectroscopic measurement device 2 and a PC 7, which is a profile generation device according to the invention. In the color management system 1, the spectroscopic measurement device 2 takes spectral images corresponding to a plurality of wavelengths from measurement target light emitted from a color pattern displayed on an image display device 8, which corresponds to an image output device according to the invention, to thereby obtain measurement data with respect to the colors from these spectral images. Further, the PC 7 generates the profile of the image display device 8 using the measurement data.

### Configuration of PC and Image Display Device

The PC 7 is provided with an image data output section 71, a profile output section 72, and a storage section 73, and is configured so as to be able to communicate with the spectroscopic measurement device 2 and the image display device 8.

The image data output section 71 outputs image data for making a display section 82 display a measurement target image X to the image display device 8 to thereby make the image display device 8 display the measurement target image X. It should be noted that the image data of the measurement target image X can also be stored in advance in the storage section 73, or can also be generated using a program and a variety of data stored in the storage section 73.

The profile output section 72 generates the profile of the image display device 8 using the measurement data of the measurement target image X, which is measured by the spectroscopic measurement device 2. Further, the profile output section 72 outputs the profile thus generated to the image display device 8.

The image data output section 71 and the profile output section 72 described above are realized by an operational circuit including a CPU, a ROM, a RAM, and so on provided to the PC7 reading and then executing a program stored in the storage section 73.

The storage section 73 stores the program for executing the process performed by the image data output section 71 and the profile output section 72, and a variety of data.

It should be noted that the PC7 is provided with input sections not shown such as a keyboard or a mouse, and acts in accordance with an operation of the input section by the user.

The image display device 8, which is a target of the generation of the profile, is provided with a display control section 81 and the display section 82. The image display device 8 corresponds to one of a variety of types of displays such as a liquid crystal display, a plasma display, or an organic EL display, and displays the measurement target image X on the display section 82 based on the control of the display control section 81.

Further, the display control section 81 performs a color adjustment of the display section 82 using the profile generated by the color management system 1.

### Measurement Target Image

Hereinafter, the measurement target image X, which is displayed on the display section 82, and is measured by the spectroscopic measurement device 2, will be explained.

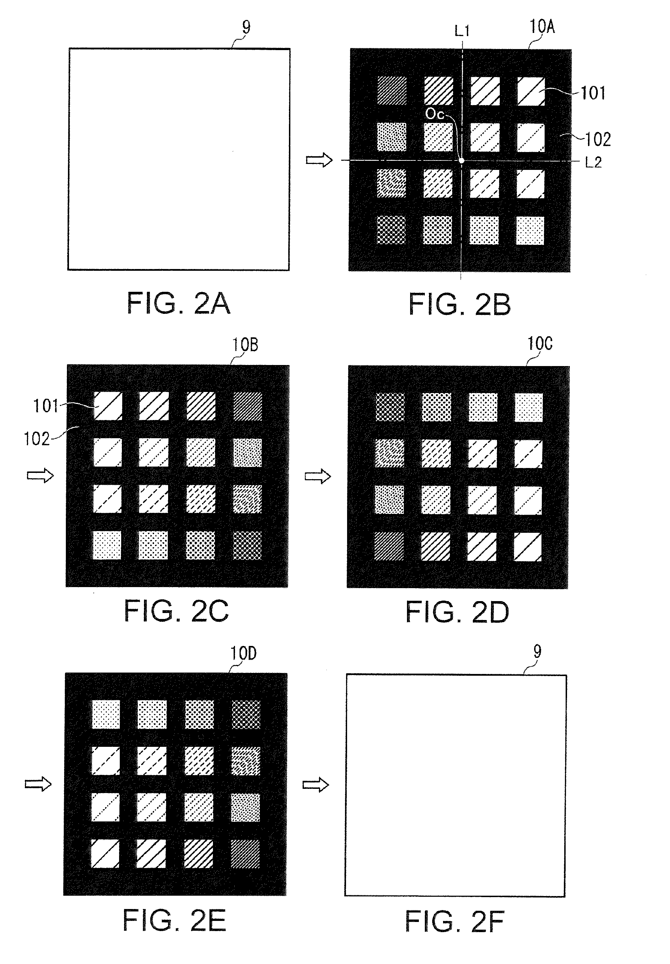

Fig. 2 is a diagram showing the measurement target image X.

As the measurement target image X, as shown in Fig. 2, an identification image 9 for indicating the beginning of the measurement is displayed in the spectroscopic measurement image 2, then color patterns 10A, 10B, 10C, and 10D for obtaining the measurement data for generating the profile of the image display device 8 are sequentially displayed, and then the identification image 9 for indicating the end of the measurement is displayed.

The color patterns 10A, 10B, 10C, and 10D, and the identification image 9 are each displayed for a predetermined measurement time necessary for the spectroscopic measurement device 2 to obtain the measurement data.

The identification image 9 shown in (a) in Fig. 2 is an image for displaying white, which is a reference color with the RGB value (R, G, B)=(255, 255, 255). The spectroscopic measurement device 2 obtains the reference color data by measuring the identification image 9, and then corrects the measurement data using the reference color data as the reference. The identification image 9 is displayed for the predetermined measurement time similarly to the color patterns 10A, 10B, 10C, and 10D. It should be noted that in the present embodiment, the identification image 9 is also used as a reference color image according to the invention for displaying the reference color.

Here, the spectroscopic measurement device 2 can transmit only light with a predetermined wavelength, and is provided with a variable wavelength interference filter, which can change the predetermined wavelength, as described later. Even at a moment when the identification image 9 is displayed, in other words, in a standby state (a non-driven state) before starting the measurement, the variable wavelength interference filter is capable of transmitting the light with a standby wavelength (a wavelength corresponding to an initial gap) corresponding to the standby state. Therefore, when the identification image 9 for emitting the light including the standby wavelength is displayed in a measurement area of the spectroscopic measurement device 2, namely an imaging area (hereinafter also referred to as an imaging area of the spectroscopic measurement device 2) of an imaging element 32, the spectroscopic measurement device 2 detects that the identification image 9 is displayed, and then starts the measurement taking the detection as a trigger. The detection of the identification image 9 by the spectroscopic measurement device 2 will be described later in detail.

As shown in (b) in Fig. 2, the color pattern 10A has a plurality of color patches 101 arranged and displayed in the imaging area of the spectroscopic measurement device 2 in a matrix, and black lines 102 displayed between the color patches 101.

The plurality of color patches 101 display respective colors different from each other. In the case in which the target of the generation of the profile is the image display device 8 provided with the display section 82 as one of a variety of types of displays as in the present embodiment, the plurality of color patches 101 include color patches corresponding respectively to all of the colors necessary to figure out the display characteristics of the image display device 8 having the RGB values (R, G, B) = (0, 0, 0) through (255, 255, 255), namely the predetermined colors having respective grayscales different from each other.

Further, the black lines 102 are each a line for displaying black corresponding to the RGB value (R, G, B)=(0, 0, 0).

The color pattern 10B is obtained by changing the display positions of the respective color patches 101 of the color pattern 10A so that the color pattern 10B is line symmetric with the color pattern 10A about an imaginary line L1 (a line passing through the center Oc of the color pattern 10A in a vertical direction) shown in (b) in Fig. 2.

Further, the color pattern 10C is obtained by changing the display positions of the respective color patches 101 of the color pattern 10A so that the color pattern 10C is line symmetric with the color pattern 10A about an imaginary line L2 (a line passing through the center Oc of the color pattern 10A in a horizontal direction) shown in (b) in Fig. 2, and the color pattern 10D is obtained by changing the display positions of the respective color patches 101 of the color pattern 10A so that the color pattern 10D is point symmetric with the color pattern 10A about the center Oc of the color pattern 10A.

The dimension of a side of the color patterns 10A, 10B, 10C, and 10D is roughly in a range of, for example, 1 mm through 10 mm, and each of the color patches 101 is displayed using a plurality of pixels of the display section 82.

Further, the identification image 9 shown in (f) in Fig. 2 is an image for instructing the termination of the measurement to the spectroscopic measurement device 2, and is an image for displaying white, which is the reference color with the RGB value (R, G, B)=(255, 255, 255). The spectroscopic measurement device 2 detects that the identification image 9 is displayed, and then terminates the measurement.

It should be noted that although the color patterns 10A, 10B, 10C, and 10D including the 16 types of color patches 101 are shown in Fig. 2 as an example, it is also possible to display color patterns including more than 16 types, for example, 100 types of color patches 101.

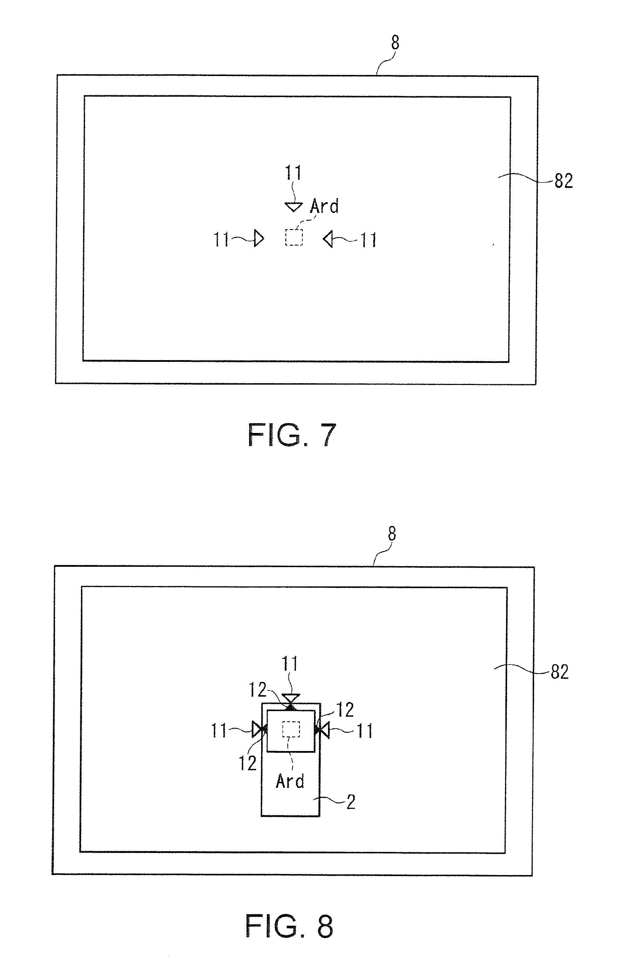

Further, in the present embodiment, the image data output section 71 also makes the measurement position marks (see measurement position marks 11 shown in Fig. 7) for indicating the arrangement position of the spectroscopic measurement device 2 in the display section 82 be displayed besides the identification image 9.

### Configuration of Spectroscopic Measurement Device

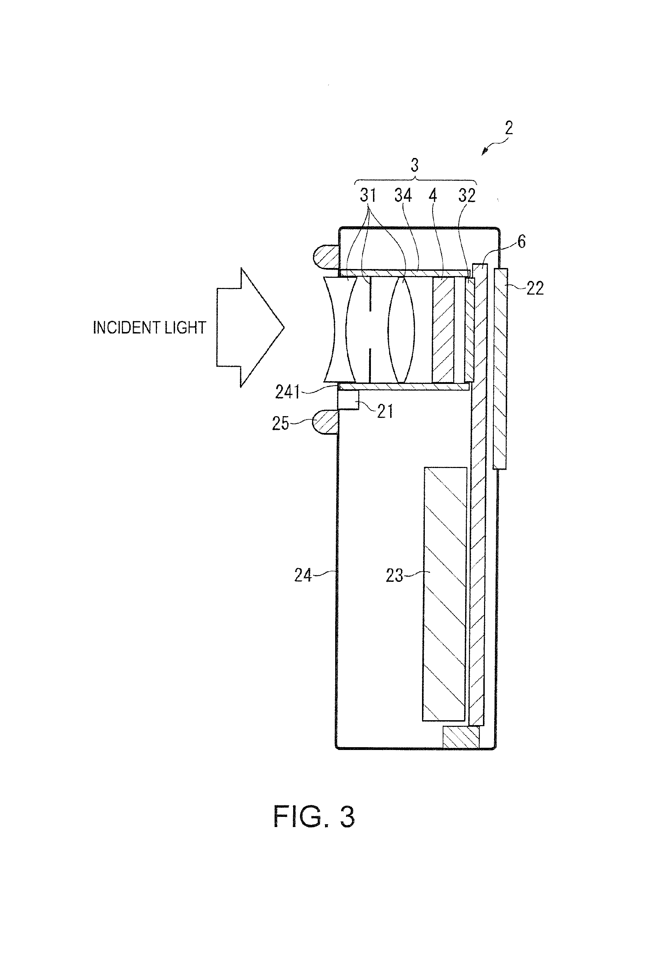

Fig. 3 is a cross-sectional view showing a schematic configuration of the spectroscopic measurement device 2.

As shown in Figs. 1 and 3, the spectroscopic measurement device 2 is provided with an optical sensor section 3 for taking an image of the measurement target light from the measurement target image X, a circuit board 6 provided with a variety of circuits for controlling the spectroscopic measurement device 2, a light source 21, a display section 22, and a battery 23, wherein the optical sensor section 3, the circuit board 6, and the light source 21, and the battery 23 are housed in an exterior case 24, and the display section 22 is installed in an installation section provided to the exterior case 24. Further, the spectroscopic measurement device 2 takes the image of the measurement target image X to obtain the spectral image.

The exterior case 24 is provided with a light entrance port 241 for taking the measurement target light into the optical sensor section 3, and a pressure-contact section 25 is disposed on the periphery of the light entrance port 241. The pressure-contact section 25 is a light-blocking member formed of an elastic member, which deforms to adhere to the display section 82 without a gap when pressed against the display section 82 of the image display device 8, and thus inhibits the outside light other than the measurement target light from entering the light entrance port 241. Further, the pressure-contact section 25 has a black surface, and is configured to be able to inhibit the light from being reflected by the surface.

The light source 21 is a light source for emitting white light and violet light such as an LED, and is disposed in an area, which is located on the periphery of the light entrance port 241 of the exterior case 24, and surrounded by the pressure-contact section 25. In the case in which the measurement target image X is drawn on a medium not emitting light such as paper, the light source 21 emits light toward the measurement target image X, and the spectroscopic measurement device 2 measures the reflected light.

The display section 22 is one of a variety of types of display devices such as a liquid crystal display or an organic EL display, and is installed in the installation section provided to the exterior case 24 across the circuit board 6 from the imaging element 32. The display section 22 displays, for example, a notification image for informing the user of the operation state of the spectroscopic measurement device 2, the measurement result, and so on. Therefore, the display section 22 corresponds to an informing section according to the invention.

The battery 23 is a power supply for supplying the spectroscopic measurement device 2 with electric power, and is a secondary cell configured to be able to be charged by a charging circuit not shown. It should be noted that it is also possible for the spectroscopic measurement device 2 to be configured to be able to be connected to an external device such as a portable terminal device such as a smartphone or a cellular phone, or the PC 7, and to be supplied by the external device with the electric power.

### Configuration of Optical Sensor

The optical sensor 3 is provided with an optical filter device 4 configured to incorporate the variable wavelength interference filter 5 inside a housing 40, a telecentric optical system 31 for guiding the measurement target light to the variable wavelength interference filter 5, the imaging element 32 for receiving the light transmitted through the variable wavelength interference filter 5, and a voltage control section 33 for varying the wavelength of the light to be transmitted through the variable wavelength interference filter 5.

The optical filter device 4, the telecentric optical system 31, and the imaging element 32 are disposed at predetermined positions of an optical component housing 34 having openings at both ends. The imaging element 32 is disposed in an end portion of the optical component housing 34, the end portion being located on the circuit board 6 side, an optical component constituting the telecentric optical system 31 is disposed in an end portion located on an opposite side, and the end portion located on the opposite side is connected to the light entrance port 241 provided to the exterior case 24.

### Configuration of Variable Wavelength Interference Filter

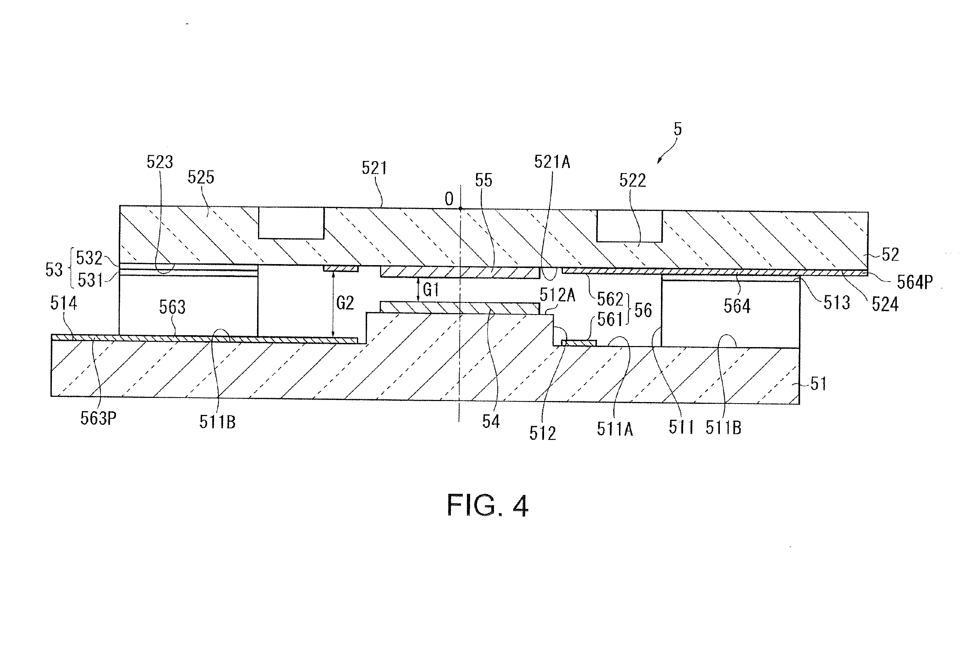

Fig. 4 is a cross-sectional view showing a schematic configuration of the variable wavelength interference filter 5.

The variable wavelength interference filter 5 is housed in the housing 40, and the inside of the housing 40 becomes an enclosed space kept in a vacuum environment (or an environment with reduced pressure lower than an atmospheric pressure). As shown in Fig. 4, the variable wavelength interference filter 5 is provided with a stationary substrate 51 as a first substrate according to the invention, and a movable substrate 52 as a second substrate according to the invention. The stationary substrate 51 and the movable substrate 52 are configured integrally by bonding a first bonding section 513 of the stationary substrate 51 and a second bonding section 523 of the movable substrate 52 to each other with bonding films 53 (a first bonding film 531 and a second bonding film 532) each formed of, for example, a plasma polymerized film including siloxane as a principal component.

It should be noted that in the explanation below, the plan view viewed from the substrate thickness direction of the stationary substrate 51 or the movable substrate 52, namely the plan view of the variable wavelength interference filter 5 viewed from the stacking direction of the stationary substrate 51, the bonding films 53, and the movable substrate 52, is referred to as a filter plan view.

In the filter plan view, one-side side of the stationary substrate 51 projects from the movable substrate 52 to the outside. In the projected portion, a surface, which is exposed when viewing the variable wavelength interference filter 5 from the movable substrate 52 side, constitutes a first electrical component installation surface 514.

Further, in the filter plan view, one-side side opposed to the first electrical component installation surface 514 among the sides of the movable substrate 52 projects from the stationary substrate 51 to the outside. In the projected portion, a surface, which is exposed when viewing the variable wavelength interference filter 5 from the stationary substrate 51 side, constitutes a second electrical component installation surface 524.

The stationary substrate 51 is provided with an electrode arrangement groove 511 and a reflecting film installation section 512. The stationary substrate 51 is formed to have a thickness dimension larger than that of the movable substrate 52, and no deflection of the stationary substrate 51 occurs due to the electrostatic attractive force when applying a voltage between a stationary electrode 561 and a movable electrode 562, or the internal stress of the stationary electrode 561.

The electrode arrangement groove 511 is formed to have a ring-like shape cantered on the center point O of the variable wavelength interference filter 5 in the filter plan view. The reflecting film installation section 512 is formed so as to protrude toward the movable substrate 52 from the central portion of the electrode arrangement groove 511 in the plan view described above. Here, the bottom surface of the electrode arrangement groove 511 forms an electrode installation surface 511A on which the stationary electrode 561 is disposed. Further, the projection tip surface of the reflecting film installation section 512 forms a reflecting film installation surface 512A, and is provided with a stationary reflecting film 54.

Further, the stationary substrate 51 is provided with electrode extraction grooves 511B respectively extending from the electrode arrangement groove 511 toward the first electrical component installation surface 514 and the second electrical component installation surface 524.

The electrode installation surface 511A of the electrode arrangement groove 511 is provided with the stationary electrode 561. The stationary electrode 561 is disposed in an area of the electrode installation surface 511A, the area being opposed to the movable electrode 562 of a movable section 521 described later.

Further, the stationary substrate 51 is provided with a stationary extraction electrode 563 extending from the outer peripheral edge of the stationary electrode 561 to the first electrical component installation surface 514 through the electrode extraction groove 511B having a ring-like shape. An extension tip section of the stationary extraction electrode 563 constitutes a stationary electrode pad 563P in the first electrical component installation surface 514.

It should be noted that although in the present embodiment, there is shown a configuration of providing the single stationary electrode 561 to the electrode installation surface 511A, it is also possible to adopt, for example, a configuration (a dual electrode configuration) having two concentric electrodes centered on the planar center point O.

Further, the surface of the stationary substrate 51, which is opposed to the movable substrate 52, and on which either of the electrode arrangement groove 511, the reflecting film installation section 512, and the electrode extraction grooves 511B is not formed, constitutes the first bonding section 513. The first bonding section 513 is provided with the first bonding film 531, and by bonding the first bonding film 531 to the second bonding film 532 provided to the movable substrate 52, the stationary substrate 51 and the movable substrate 52 are bonded to each other as described above.

The movable substrate 52 is provided with the movable section 521 having a circular shape centered on the planar center point O in the filter plan view, a holding section 522 disposed outside the movable section 521 and for holding the movable section 521, and a substrate peripheral section 525 disposed outside the holding section 522.

The movable section 521 is formed to have a thickness dimension larger than that of the holding section 522. The movable section 521 is formed to have a diameter larger than at least the diameter of the outer peripheral edge of the reflecting film installation surface 512A in the filter plan view. Further, the movable section 521 is provided with the movable electrode 562 and the movable reflecting film 55, which corresponds to a second reflecting film according to the invention.

The movable electrode 562 is opposed to the stationary electrode 561 via the inter-electrode gap G2, and is formed to have a ring-like shape, which is the same shape as that of the stationary electrode 561. Further, the movable substrate 52 is provided with a movable extraction electrode 564 extending from the outer peripheral edge of the movable electrode 562 toward the second electrical component installation surface 524. An extension tip section of the movable extraction electrode 564 constitutes a movable electrode pad 564P in the second electrical component installation surface 524.

The movable reflecting film 55 is disposed at the central portion of a movable surface 521A of the movable section 521 so as to be opposed to the stationary reflecting film 54 via the inter-reflecting film gap G1.

The holding section 522 is a diaphragm surrounding the periphery of the movable section 521, and is formed to have a thickness dimension smaller than that of the movable section 521. Such a holding section 522 is easier to be deflected than the movable section 521, and it becomes possible to displace the movable section 521 toward the stationary substrate 51 with a weak electrostatic attractive force.

As described above, the substrate peripheral section 525 is disposed outside the holding section 522 in the filter plan view. The surface of the substrate peripheral section 525 opposed to the stationary substrate 51 is provided with the second bonding section 523 opposed to the first bonding section 513. Further, the second bonding section 523 is provided with the second bonding film 532, and as described above, by bonding the second bonding film 532 to the first bonding film 531, the stationary substrate 51 and the movable substrate 52 are bonded to each other.

### Configuration of Telecentric Optical System, Imaging Element, and Voltage Control Section

The telecentric optical system 31 is an optical system for guiding the incident light to the variable wavelength interference filter 5, and is composed of a plurality of optical components such as a lens. The telecentric optical system 31 emits the light so that the principal ray of the incident light is parallel to the optical axis, and is perpendicular to the stationary substrate 51 of the variable wavelength interference filter 5.

The imaging element 32 is disposed on the circuit board 6 so as to be located on the focal plane of the telecentric optical system 31. The measurement target light emitted from the measurement target image X is guided by the telecentric optical system 31, and is imaged in the imaging element 32. The imaging element 32 is provided with a plurality of detection elements (not shown) arranged in an array. These detection elements are formed of photoelectric conversion elements such as charge coupled device (CCD) elements or complimentary metal-oxide semiconductor (CMOS) elements, and generate electric signals corresponding to the light intensity of the light received, then output the electric signals to a light intensity acquisition section 63 described later. The imaging element 32 takes an image of one of the color patches 101 shown in Fig. 2 with the plurality of detection elements (pixels).

The voltage control section 33 applies a drive voltage corresponding to a wavelength (a measurement wavelength) of the light to be transmitted through the variable wavelength interference filter 5 to the variable wavelength interference filter 5 in accordance with the control by a filter control section 62 described later.

### Configuration of Circuit Board

The circuit board 6 is provided with a variety of circuits for controlling the spectroscopic measurement device 2. Specifically, as shown in Fig. 1, a storage section 61, the filter control section 62, the light intensity acquisition section 63, a trigger detection section 64, a position identification section 65, a relative value acquisition section 66, a light source control section 67, a display control section 68, and a communication section 69 are disposed. The variety of circuits provided to the circuit board 6 are configured by appropriately combining operational circuits, memories, a variety of electric circuits, and the like.

The storage section 61 stores various programs and various data for controlling the spectroscopic measurement device 2. The data corresponds to, for example, correlation data (V-λ data) representing the wavelength of the transmitted light with respect to the drive voltage applied to an electrostatic actuator 56, a changing pattern (e.g., the predetermined measurement time, information of the color patterns) of the measurement target image X described above, and information of the measurement wavelength (e.g., a measurement starting wavelength, a changing interval of the wavelength, and a measurement ending wavelength). Further, the storage section 61 stores the light intensity obtained by the light intensity acquisition section 63 as the spectral image associated with the pixel positions (coordinate values) of the respective detection elements and the measurement wavelength when detected.

The filter control section 62 obtains a voltage value (an input value) of a drive voltage corresponding to the measurement wavelength based on the V-λ data stored in the storage section 61, and then outputs the voltage value thus obtained to the voltage control section 33 to thereby vary the distance of the gap of the variable wavelength interference filter 5.

Further, the filter control section 62 performs the detection of the change timing of the measurement wavelength, the change of the measurement wavelength, the change of the drive voltage corresponding to the change in the measurement wavelength, the determination of the end of the measurement, and so on based on the variety of data stored in the storage section 61, and controls the voltage control section 33 based on the determination.

The light intensity acquisition section 63 obtains the received light intensity of the transmitted light for each of the detection elements of the imaging element 32 to thereby obtain the spectral image. The spectral image in which the pixel position and the received light intensity are made to correspond to each other is associated with the measurement wavelength when detected, and is stored in the storage section 61. It should be noted that the imaging element 32 and the light intensity acquisition section 63 correspond to an imaging section according to the invention.

The trigger detection section 64 corresponds to an identification image detection unit and a reference color image detection unit according to the invention, and in the case in which the identification image 9 is displayed on the display section 82, the trigger detection section 64 detects that the identification image is displayed based on the received light intensity at each of the pixel positions detected by the imaging element 32 and the spectral image obtained by the light intensity acquisition section 63.

The position identification section 65 corresponds to a position identification unit according to the invention, and identifies the pixel positions, where the reference color is displayed, and the pixel positions, where the color patches 101 are displayed, from the measurement data formed of the spectral images of the respective measurement wavelengths obtained by the light intensity acquisition section 63. The identification of the pixel positions is performed by identifying the color of each of the pixel positions from the pattern of the received light intensity of the measurement data of each of the pixel positions.

The relative value acquisition section 66 calculates the relative value between each of the color patterns and the measurement data taking the reference color data (the measurement data of white displayed on the display section 82) obtained by measuring the identification image 9 as a reference.

The light source control section 67 controls lighting and extinction of the light source 21 in accordance with an instruction of the user.

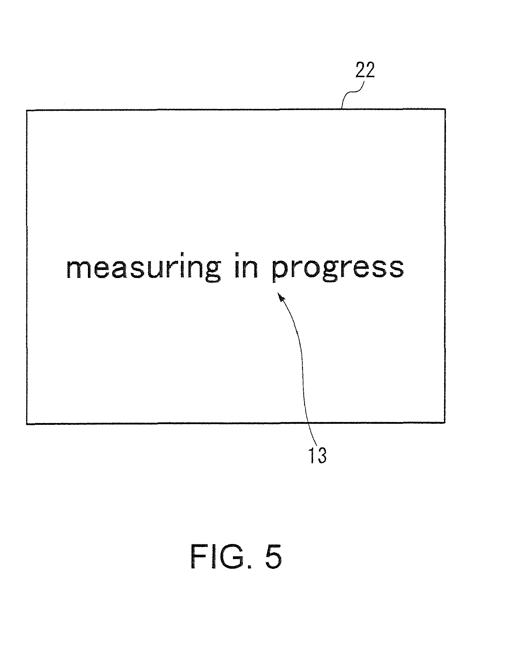

The display control section 68 controls the display content of the display section 22. As the display content, for example, a notification image for informing the user of the operation state of the spectroscopic measurement device 2, the measurement result, and so on can be cited. Fig. 5 shows an example of the notification image. The notification image 13 shown in Fig. 5 is an image for notifying the user of the fact that the measurement by the spectroscopic measurement device 2 is in progress.

The communication section 69 outputs the measurement data as the measurement result of the measurement target image X by the spectroscopic measurement device 2 and the relative values calculated by the relative value acquisition section 66 to the PC 7 as profile-generating data. The communication section 69 is configured so as to be able to communicate with the PC 7 using wired communication via a LAN or the like, or a variety of types of wireless communication such as Wi-Fi (registered trademark), Bluetooth (registered trademark), or infrared communication. It should be noted that the storage section 61 and the communication section 69 correspond to a data output section according to the invention.

### Action of Color Management System

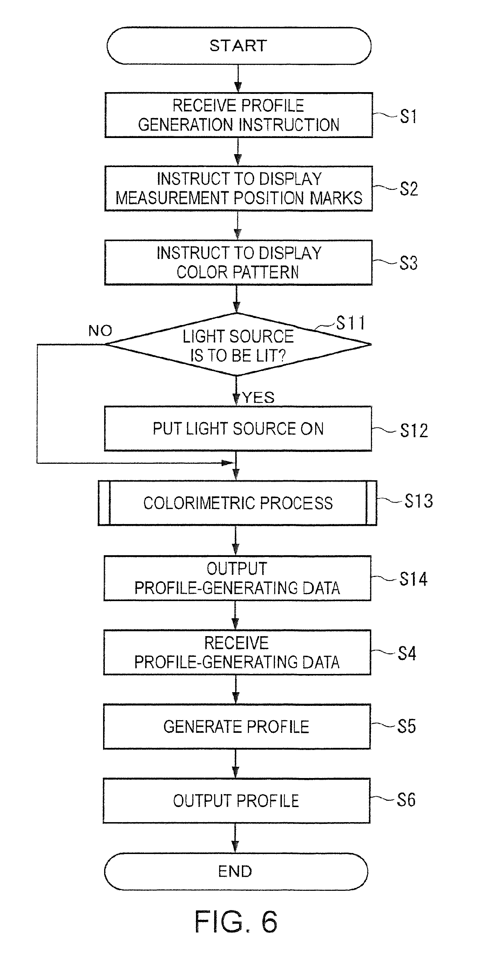

Fig. 6 is a flowchart showing an action of the color management system 1.

As shown in Fig. 6, when the PC 7 receives (S1) a profile generation instruction by the user, the image data output section 71 makes (S2) the display section 82 of the image display device 8 display measurement position marks 11 as shown in Fig. 7. It should be noted that in Fig. 7, the display area Ard where the measurement target image X is displayed is indicated by a dotted line. The measurement position marks 11 are marks each having a triangular shape, and disposed so as to surround the display area of the measurement target image X, namely the imaging area of the spectroscopic measurement device 2.

After the measurement marks 11 are displayed on the display section 82, the user disposes the spectroscopic measurement device 2 on the display section 82 of the image display device 8. As shown in Fig. 8, on the surface of the exterior case 24, on which the display section 22 of the spectroscopic measurement device 2 is disposed, there are disposed alignment marks 12 for disposing the spectroscopic measurement device 2 on the display section 82 so that the display area Ard and the imaging area of the spectroscopic measurement device 2 coincide with each other. By disposing the spectroscopic measurement device 2 so that the alignment marks 12 coincide with the measurement position marks 11, the user can dispose the spectroscopic measurement device 2 in a state in which the display area Ard and the imaging area coincide with each other.

After disposing the spectroscopic measurement device 2 on the display section 82, the user instructs the PC 7 to start the measurement. In the PC 7 having received the instruction to start the measurement, the image data output section 71 outputs the color pattern to be displayed on the display section 82 to the image display device 8 to thereby perform (S3) the display instruction of the color pattern.

The image display device 8, which has received the display instruction of the color pattern, outputs the color pattern to the display section 82.

It should be noted that it is also possible for the PC 7 to make the color pattern be displayed and make the spectroscopic measurement device 2 start the measurement when a predetermined time has elapsed after receiving the profile generation instruction.

Meanwhile, when detecting the display on the display section 82, the spectroscopic measurement device 2 performs the spectroscopic measurement process.

In the spectroscopic measurement process by the spectroscopic measurement device 2, firstly, the light source control section 67 determines (S11) whether or not it is required to light the light source 21. In the step S11, whether or not there is the instruction of lighting the light source 21 by the user is determined. Alternatively, it is also possible to determine whether or not it is necessary to light the light source 21 based on the detection result by the illuminance sensor not shown.

In the case in which it is determined in the step S11 that it is necessary to light the light source 21, the light source control section 67 supplies the light source 21 with the electric power to thereby light (S12) the light source 21, and then, the spectroscopic measurement device 2 performs (S13) a colorimetric process. On the other hand, in the case in which it is determined that the light source 21 will not be lit, the light source control section 67 performs (S13) the colorimetric process without lighting the light source 21.

### Colorimetric Process

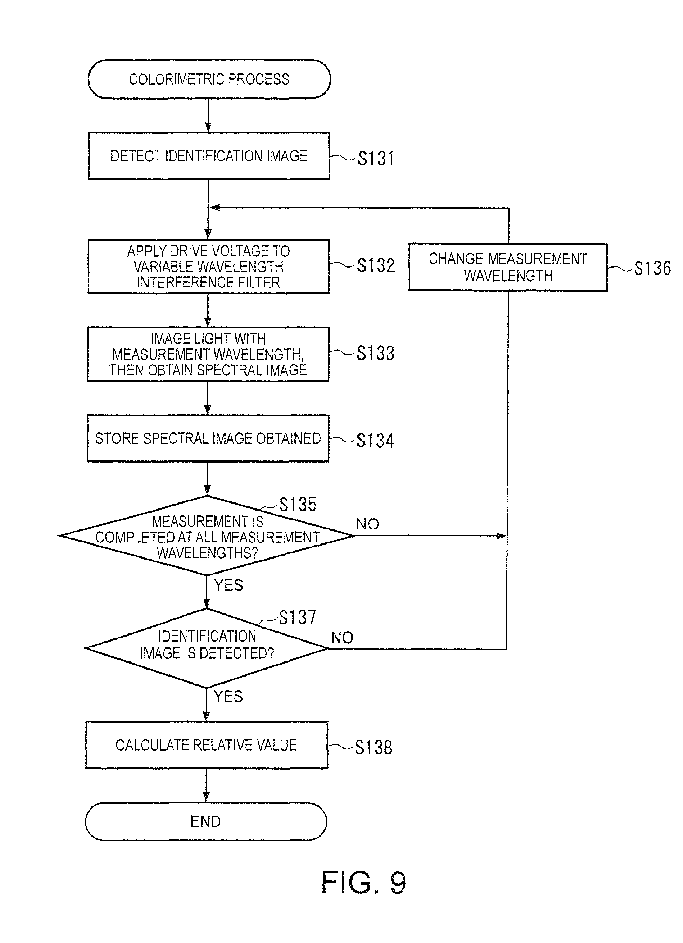

Fig. 9 is a flowchart showing the details of the colorimetric process of the step S13 shown in Fig. 6.

When the PC 7 instructs the image display device 8 to display the color pattern in the step S3, the measurement target images X shown in Fig. 2 are sequentially displayed on the display section 82 of the image display device 8.

In other words, firstly, as shown in (a) in Fig. 2, the identification image 9 is displayed on the display area Ard. It should be noted that at the moment when the identification image 9 is displayed, the measurement is not yet started, the variable wavelength interference filter 5 is in the standby state, and the dimension of the inter-reflecting film gap G1 is set to an initial gap dimension. When the identification image 9 is displayed, the light with the wavelength corresponding to the initial gap dimension described above is detected in the entire surface of the imaging element 32 through the variable wavelength interference filter 5. The trigger detection section 64 detects (S131) the fact that the image presently displayed is the identification image 9 based on the light receiving pattern in the pixels of the imaging element 32. The spectroscopic measurement device 2 starts the spectroscopic measurement taking the detection process by the trigger detection section 64 as a trigger.

When the identification image 9 is detected by the trigger detection section 64, the filter control section 62 controls the voltage control section 33 so as to apply the drive voltage corresponding to the measurement wavelength. The voltage control section 33 applies (S132) the drive voltage to the electrostatic actuator 56.

When the drive voltage described above is applied to the electrostatic actuator 56, the inter-reflecting film gap G1 is changed to the dimension corresponding to the drive voltage. Then, the light with the measurement wavelength is transmitted through the variable wavelength interference filter 5, detected by the imaging element 32, and thus, the filter control section 62 obtains (S133) the spectral image of the measurement wavelength.

The spectral image thus obtained is stored (S134) to the storage section 61 as the reference color data based on the identification image 9 with the received light intensity and the pixel position associated with each other.

Subsequently, the filter control section 62 performs the measurement at all of the measurement wavelengths set in advance with respect to each of the measurement target images X (the identification image 9 of the reference color, and the color patterns 10A, 10B, 10C, and 10D), and then determines (S135) whether or not the spectral image is obtained, namely whether or not the measurement is completed at all of the measurement wavelengths. In the case in which the measurement at all of the measurement wavelengths has not yet been completed, the filter control section 62 changes (S136) the measurement wavelength. Thereafter, the steps S132 through S136 are repeated until the measurement at all of the measurement wavelengths is completed.

Then, the filter control section 62 determines whether or not the measurement target image X newly displayed is the identification image 9. In the case in which the measurement target image X is not the identification image 9, namely in the case in which the color pattern is displayed, the measurement is not terminated, but the measurement of the color pattern at all of the measurement wavelengths is performed (S132 through S136) while changing (S136) the measurement wavelength.

On the other hand, in the case in which the fact that the identification image 9 is displayed is detected (S137), the filter control section 62 terminates the measurement.

Subsequently, the relative value acquisition section 66 calculates (S138) the relative value of the measurement data at each of the pixel positions of the spectral image taking the measurement data at each of the pixel positions of the reference color data thus obtained as a reference, and then stores the relative value thus calculated so as to be associated with the measurement data of each of the pixels.

Subsequently, going back to Fig. 6, the spectroscopic measurement device 2 outputs (S14) the measurement data and the relative values stored in the storage section 61 from the communication section 69 to the PC 7 as the profile-generating data.

When receiving (S4) the profile-generating data from the spectroscopic measurement device 2, the PC 7 generates (S5) the profile of the image display device 8, and then outputs (S6) the profile thus generated to the image display device 8 using the profile output section 72. The profile is generated using, for example, the averaged measurement data, obtained by calculating an average value of the received light intensity at the pixel position where the same color patch 101 is measured in the measurement data of the color patterns 10A, 10B, 10C, and 10D.

It should be noted that the display control section 81 of the image display device 8 having received the profile performs the color adjustment of the display section 82 using the profile data.

### Functions and Advantages of First Embodiment

In the color management system 1 and the spectroscopic measurement device 2 according to the present embodiment, the light from the color patterns 10A, 10B, 10C, and 10D each including a plurality of colors of color patches 101 disposed in the imaging area of the imaging element 32 constituting the imaging section is input to the variable wavelength interference filter 5, and the light dispersed via the variable wavelength interference filter 5 is imaged by the imaging section to thereby obtain the spectral image. Then, the measurement data having the spectral image and the pixel positions thus received associated with each other is output to the PC 7 as the profile-generating data.

Thus, a number of color patches 101 can simultaneously be measured, and reduction of the time necessary for the measurement can be achieved. Further, since it is not necessary to scan the color patterns 10A, 10B, 10C, and 10D with the optical sensor section 3 including the imaging element 32 when performing the measurement, there is no need to provide a translation device for translating the optical sensor section 3, and thus, simplification and miniaturization of the system and the device can be achieved.

Further, since such measurement data as described above is accurate spectrum data of the measurement target image X output from the image display device 8, the profile output section 72 can generate the profile with high color reproducibility with respect to the original image using such measurement data. Further, as described above, since the colorimetric process in the spectroscopic measurement device 2 can be performed promptly, the time necessary to generate the profile can also be reduced.

In the spectroscopic measurement device 2 according to the present embodiment, the incident light is dispersed using the variable wavelength interference filter 5, which is a variable wavelength Fabry-Perot etalon. Thus, it is possible to take out the lights with a plurality of wavelengths in a short period of time by driving the electrostatic actuator 56 to vary the dimension of the inter-reflecting film gap G1, and thus, the reduction of the time necessary for the colorimetry of the color patterns 10A through 10D can be achieved. Further, the Fabry-Perot etalon can be miniaturized compared to the case of using, for example, AOTF or LCTF, and can therefore make a contribution to achieving miniaturization of the spectroscopic measurement device, and moreover easily be attached to the spectroscopic measurement device.

Incidentally, in the case of using a variable wavelength etalon, which is formed by, for example, forming a first reflecting film on one surface of a sacrifice layer having a plate-like shape, forming a second reflecting film on the other surface, and then removing the sacrifice layer by etching or the like, as the variable wavelength interference filter, a deflection might be caused in the first reflecting film and the second reflecting film in some cases.

In contrast, in the spectroscopic measurement device 2 according to the present embodiment, the variable wavelength interference filter 5 has the configuration of disposing the stationary reflecting film 54 on the stationary substrate 51, and disposing the movable reflecting film 55 on the movable substrate 52, and thus, the deflection and the tilt of each of the reflecting films can be suppressed.

In the spectroscopic measurement device 2 according to the present embodiment, the pressure-contact section 25 having a light blocking property is disposed so as to surround the light entrance port 241, and by pressing the pressure-contact section 25 against the display surface of the display section 82, on which the color patterns 10A, 10B, 10C, and 10D are displayed, to make the pressure-contact section 25 adhere to the display surface, it is possible to inhibit the outside light from mixing therein to thereby improve the colorimetric accuracy.

Further, since the pressure-contact section 25 is formed of an elastic member, it is possible to make the pressure-contact section 25 surely adhere to the display surface of the display section 82. Thus, the outside light can more effectively be inhibited from mixing therein.

Further, the pressure-contact section 25 is formed of a black member having a surface provided with an antireflection property and a light blocking property. Thus, it is possible to inhibit the incident light from being reflected by the surface of the pressure-contact section 25, to suppress an influence of the reflected light on the colorimetry, and to inhibit entry of the outside light other than the measurement target light.

In the spectroscopic measurement device 2 according to the present embodiment, there is provided the light source 21 disposed inside the pressure-contact section 25, and emitting the light to the display surface of the display section 82 on which the measurement target image X is displayed. Thus, it is possible to perform the measurement by emitting the reference light from the light source 21 disposed inside the pressure-contact section 25 to the color pattern even in the case in which the measurement target image X does not emit light as in the case of the color pattern drawn on a medium such as paper.

In the spectroscopic measurement device 2 according to the present embodiment, by providing the variable wavelength interference filter 5 with the telecentric optical system 31 for guiding the incident light, it is possible to guide the incident light in a direction perpendicular to the substrates 51, 52 of the variable wavelength interference filter 5, and at the same time, to achieve miniaturization of the device.

In the spectroscopic measurement device 2 according to the present embodiment, each of the color patches 101 is imaged by a plurality of pixels of the imaging element 32. Specifically, the light from one of the color patches 101 displayed so as to straddle the plurality of pixels of the display section 82 of the image display device 8 is received by the plurality of pixels of the imaging element 32. Thus, the variation in color reproducibility between the pixels in the display section 82 and the variation in light receiving sensitivity of the imaging element can be averaged, and the S/N ratio can be improved.

In the spectroscopic measurement device 2 according to the present embodiment, the notification image 13 including at least either one of the operation state of the spectroscopic measurement device 2 and the measurement result is displayed on the display section 22. By displaying the notification image 13 for notifying the user of the operation state of the spectroscopic measurement device 2, the measurement result, and so on as described above, it is possible for the user to easily figure out the operation state of the spectroscopic measurement device 2 and the measurement result.

In the color management system 1 according to the present embodiment, since the color patches 101 are arranged in a matrix, the positions of the color patches 101 in the color pattern can easily be identified.

Further, in the color management system 1 according to the present embodiment, by imaging the color patterns 10A, 10B, 10C, and 10D each having the black lines 102 displayed between the color patches 101, it is possible to separate the lights from the color patches 101 adjacent to each other, and it is possible to prevent the light from a certain color patch from interfering with the light from the adjacent color patch to thereby suppress degradation of the colorimetric accuracy, and improve the colorimetric accuracy.

Further, in the color management system 1 according to the present embodiment, the relative value acquisition section 66 calculates the relative value of the measurement data of the color patch at the pixel position taking the measurement data of the reference color thus identified at the pixel position as a reference. Thus, the profile output section 72 can generate the profile best suitable for displaying the color of the original image on the display section 82 with high reproducibility based on the measurement data and the relative value with respect to each of the color patches.

Further, in the present embodiment, the relative value between the measurement data at each of the pixels of the identification image 9 displayed with the reference color and the measurement data at each of the pixels of the color patterns is calculated. Therefore, the influences of the in-plane characteristics (e.g. , the inter-reflecting film gap G1, the film thickness and the film characteristics of the reflecting films 54, 55, and the characteristic difference between the pixels of the imaging element 32) of the variable wavelength interference filter 5 and the imaging element 32 are difficult to be exerted, and the optimum profile excluding the characteristic difference between the pixels can be generated.

In the color management system 1 according to the present embodiment, the identification image 9 for instructing the start of the measurement in the spectroscopic measurement device 2 is displayed prior to outputting the color pattern 10A to be first displayed, and then the spectroscopic measurement device 2 starts the measurement taking the fact that the identification image 9 is detected by the trigger detection section 64 for detecting the identification image 9 as a trigger. Thus, it is unnecessary to instruct the spectroscopic measurement device 2 to start the measurement in accordance with the display timing of the color pattern of the image display device 8. Therefore, since it is not required to synchronize the timing between the spectroscopic measurement device 2 and the image display device 8 directly or via a control device such as a PC, it is possible for the user to generate the profile by such a simple operation as to dispose the spectroscopic measurement device 2 at the display position of the color patterns, and to instruct the image display device 8 to display the color patterns.

It should be noted that in the case of configuring the PC 7 so as to display the color patterns when a predetermined period of time elapses after displaying the identification image 9 as described above, since it is not required to synchronize the timing nor to perform the operation of starting the color measurement by the user as described above, the profile can be generated by a simpler operation of disposing the spectroscopic measurement device 2 at the display position Ard, and then instructing the image display device 8 to display the color patterns.

Further, in the color management system 1 according to the present embodiment, the termination of the measurement is instructed to the spectroscopic measurement device 2 by displaying the identification image 9 again. Therefore, since it is not required to synchronize the timing of the termination of the measurement between the spectroscopic measurement device 2 and the image display device 8 as described above, it is possible for the user to generate the profile by such a simple operation as to dispose the spectroscopic measurement device 2 at the display position of the color patterns, and to instruct the image display device 8 to display the color patterns. Further, it is possible to make the spectroscopic measurement device 2 terminate the measurement without setting the number of color patterns of the measurement target in advance, and it is possible to make the spectroscopic measurement device 2 measure an arbitrary number of color patterns as required to thereby enhance the versatility.

Here, in the color management system 1 according to the present embodiment using the variable wavelength interference filter 5, the identification image 9 is a display including the color of the wavelength corresponding to the initial gap dimension of the variable wavelength interference filter 5. By displaying the image including the light with the wavelength, which can be transmitted through the variable wavelength interference filter 5 in the standby state, as the identification image 9, the spectroscopic measurement device 2 can recognize the start of the measurement by receiving the light with such a wavelength using the imaging element 32. Further, by driving the electrostatic actuator 56 in sync with the elapse of a predetermined time from the timing at which the light with the wavelength has been received, it is possible to synchronize the start timing of the measurement of the color patterns with the display timing of the color patterns.

In the color management system 1 according to the present embodiment, the image data output section 71 outputs the measurement position marks 11 for indicating the arrangement position of the spectroscopic measurement device 2. Thus, it becomes easy to dispose the spectroscopic measurement device 2 at the position where the imaging area of the spectroscopic measurement device 2 and the display area Ard of the measurement target image X overlap each other, and the colorimetry with high accuracy can easily be performed.

Incidentally, in some cases, the image display device 8 might have a variation in color reproducibility between the display positions. Further, in some cases, the imaging element 32 might have a variation in light receiving sensitivity between the light receiving positions.

In contrast, in the color management system 1 according to the present embodiment, the image data output section 71 sequentially outputs the plurality of color patterns 10A, 10B, 10C, and 10D different in the arrangement positions of the color patches 101 from each other to thereby display the same colors at the different display positions and receive the same colors at the different pixel positions, and thus the measurement data of each of the color patterns 10A, 10B, 10C, and 10D can be obtained. Therefore, by generating the profile using the measurement data of each of the color patterns 10A, 10B, 10C, and 10D, the variation in color reproducibility between the display positions of the image display device 8, and the variation in light receiving sensitivity between the light receiving positions of the imaging element 32 can be averaged to thereby improve the S/N ratio.

### Second Embodiment

Then, a second embodiment of the invention will be explained with reference to the accompanying drawings.

As shown in Fig. 2, in the color management system 1 according to the first embodiment described above, the plurality of color patterns different in arrangement positions of the color patches from each other are measured as the measurement target. In contrast, the color management system according to the second embodiment is different in the point that the color patterns different in color of at least a part of the plurality of color patches from each other are measured as the plurality of color patterns. Further, the color management system is also different in the point that lines with the reference color are displayed between the plurality of color patches in the color patterns.

It should be noted that since substantially the same configuration as that of the first embodiment is provided except the points described above, the measurement target images will hereinafter be explained.

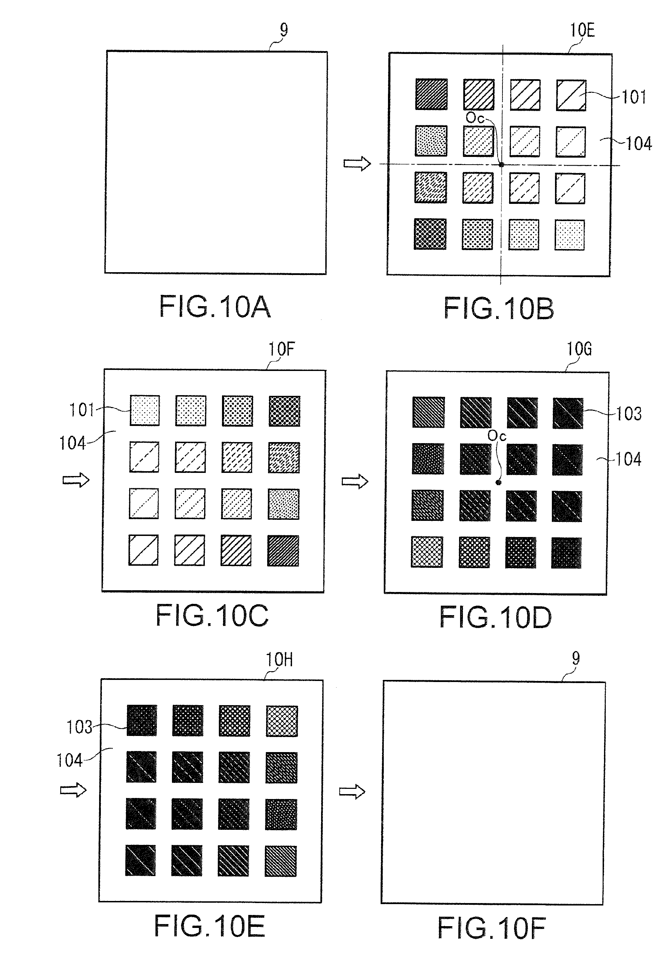

Fig. 10 shows diagrams for explaining a variation in display in the display area Ard of the display section 82.

Also in the second embodiment, similarly to the first embodiment, when making the spectroscopic measurement device 2 start the colorimetric process, the identification image 9 is displayed in the display area Ard of the display section 82 (see (a) in Fig. 10). Also in the present embodiment, white, which is the reference color, is displayed as the identification image 9.

It should be noted that since the measurement data of reference color lines 104 is used as the reference in the present embodiment, the identification image 9 is not required to be the reference color image. As such an identification image 9, a blinking image, for example, can be cited.

After the identification image 9 for instructing the start of the measurement is displayed for a predetermined period of time, the color pattern 10E is displayed as shown in (b) in Fig. 10. The color pattern 10E has the arrangement positions of the color patches 101 substantially the same as that of the color pattern 10A described above, but is provided with the reference color lines 104 displayed between the color patches 101.

In the present embodiment, as the reference color lines 104 with the reference color, there are displayed the reference color lines 104 with a white color with the RGB value (R, G, B)=(255, 255, 255).

After the color pattern 10E is displayed for the predetermined measurement time, the color pattern 10F, which is obtained by changing the display positions of the color patches 101 so that the color pattern 10F is point symmetric with the color pattern 10E about the center Oc, is then displayed for the predetermined measurement time (see (c) in Fig. 10).

Subsequently, as shown in (d) in Fig. 10, the color pattern 10G is displayed. The color pattern 10G has a plurality of color patches 103 arranged and displayed in the imaging area of the spectroscopic measurement device 2 in a matrix, and the reference color lines 104 displayed between the color patches 103.

The color patches 103 have respective colors different from the colors of the color patches 101 included in the color patterns 10E, 10F.

Further, after the color pattern 10G is displayed for the predetermined measurement time, the color pattern 10H is displayed as shown in (e) in Fig. 10. The color pattern 10H is obtained by changing the display positions of the respective color patches 103 so that the color pattern 10H is point symmetric with the color pattern 10G about the center Oc.

Finally, the identification image 9 is displayed again for instructing the termination of the measurement.

In the color management system according to the present embodiment, although the color management process is performed using substantially the same process as that of the first embodiment described above, the process of the step S138 shown in Fig. 9 is different.

Specifically, in the present embodiment, the position identification section 65 first identifies the pixel positions of the color patches 103 and the reference color lines 104 in the step S138. Then, the relative value acquisition section 66 calculates the relative value based on the measurement data of the color patch 103 and the measurement data (the reference color data) of the reference color line 104 at the pixel position closest to the pixel position of the present color patch.

### Functions and Advantages of Second Embodiment

In the color management system according to the present embodiment, the color patterns 10E, 10F, 10G, and 10H each having the reference color lines 104 displayed between the color patches 101 or the color patches 103 are imaged, and the measurement data based on the color patches 101 and the color patches 103, and the reference color data based on the reference color of the reference color lines 104 are obtained. Thus, similarly to the first embodiment described above, the profile output section 72 can generate the profile best suitable for displaying the color of the original image on the display section 82 with high reproducibility based on the measurement data and the relative value with respect to each of the color patches.

Further, also in the present embodiment, since the relative value between the reference color data of the reference color line 104 closest to the pixel position of the color patch 103 and the measurement data of the color patch is calculated, the influences of the in-plane characteristics of the variable wavelength interference filter 5 and the imaging element 32 are difficult to be exerted, and the optimum profile excluding the characteristic difference between the pixels can be generated.

In the color management system according to the present embodiment, the image display device is made to sequentially display a plurality of color patterns different in colors of the color patches from each other (e.g. , the color pattern 10F and the color pattern 10G), and the profile is generated using the measurement data obtained by performing the colorimetry on the plurality of color patterns. Thus, it is possible to perform the colorimetry on the color patches with a larger number of colors than in the case of performing the colorimetry on the color patterns having the same color patches, and improvement of the colorimetric accuracy can be achieved.

### Modifications of Embodiments

It should be noted that the invention is not limited to the embodiments described above, but includes modifications, improvements, and so on within a range where the advantages of the invention can be achieved.

For example, although in each of the embodiments described above, there is explained the color management system, which outputs the profile of a single image display device 8, and makes the color adjustment of the image display device 8 be performed, the invention is not limited to this configuration, but it is also possible to perform color matching between a plurality of image output devices.

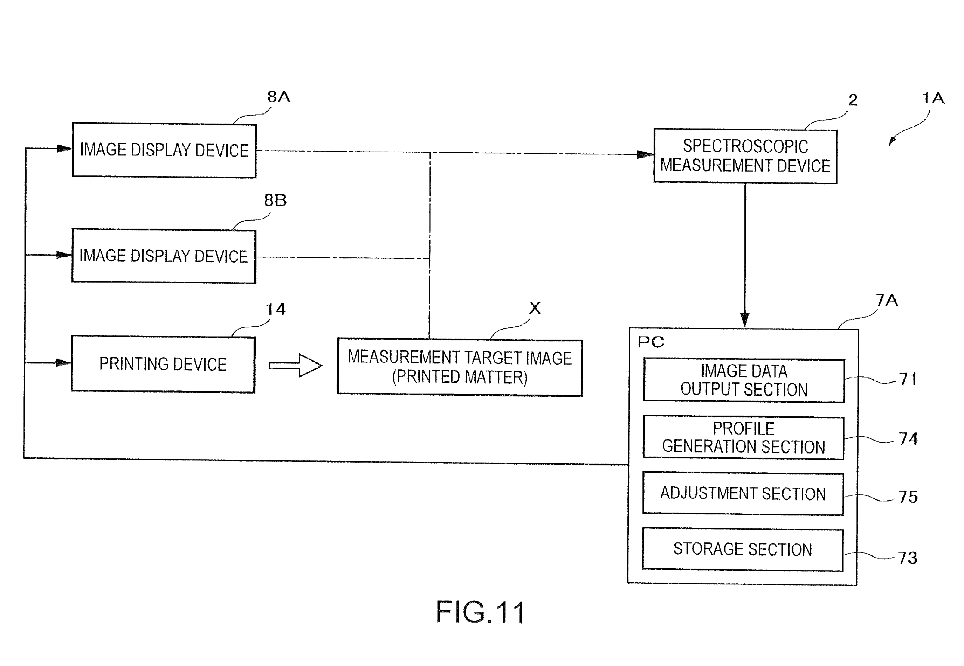

Fig. 11 is a block diagram showing a schematic configuration of a color management system 1A as an example of the color management system according to the invention.

As shown in Fig. 11, the color management system 1A is provided with the spectroscopic measurement device 2, and the PC 7, and performs the color matching between the plurality of image display devices 8A, 8B, and a printing device 14 as the image output devices.

The color management system 1A is different from the color management system according to any one of the embodiments described above in the point that the PC 7 is provided with a profile generation section 74 for generating the profiles of the image display devices 8A, 8B and the printing device 14 from the measurement data, and an adjustment section 75 for making the color matching be performed based on each of the profiles of the image display devices 8A, 8B and the printing device 14 thus generated, but has substantially the same configuration as that of each of the embodiments described above in other points, and generates the profiles using substantially the same method.

Further, although in each of the embodiments described above, the image display device 8 provided with one of a variety of displays as the display section 82 is described as an example of the image output device, the invention is not limited to this example. In the color management system 1A according to the present modified example, the printing device 14 for displaying an image on a medium by printing the medium such as paper is also included in the image output devices to be the target of the generation of the profile.

The printing device 14 draws an image, which has the color patches corresponding to a plurality of colors obtained by modifying the density of each of the colors of CMYK at predetermined intervals arranged in a matrix, on the medium as the color pattern. Further, the spectroscopic measurement device 2 is configured to be able to start the measurement in accordance with an input of an operating section (e. g. , a button or a touch panel provided to the display section 22) not shown, and obtains the measurement data by sequentially measuring the plurality of color patterns printed on the medium.

The PC 7A is provided with the image data output section 71, the storage section 73, the profile generation section 74, and the adjustment section 75.

The profile generation section 74 generates the profiles of the image display devices 8A, 8B, and the printing device 14 using the measurement data of the measurement target image X, which is measured by the spectroscopic measurement device 2.

The adjustment section 75 makes the color matching be performed between the image display devices 8A, 8B, and the printing device 14 based on the profiles of the image display devices 8A, 8B and the printing device 14 generated by the profile generation section 74. The adjustment section 75 outputs adjustment data (e.g., data of the adjustment amount in each of the RGB values or the CMYK values, or a function for calculating such an adjustment amount) for making the image display devices 8A, 8B, and the printing device 14 perform the color adjustment.

In the color management system 1A according to the present modified example, the spectroscopic measurement device 2 measures the measurement target image X (the color pattern or the reference color image) displayed on the image display devices 8A, 8B to thereby obtain the measurement data using substantially the same process as in each of the embodiments described above. Further, the spectroscopic measurement device 2 measures the measurement target image X as a printed matter output by the printing device 14 to thereby obtain the measurement data. Then, the spectroscopic measurement device 2 calculates the relative value from the reference color data and the measurement data, and then outputs the measurement data and the relative value to the PC 7A as the profile-generating data.

When receiving the profile-generating data from the spectroscopic measurement device 2, the PC 7A generates the profiles of the image display devices 8A, 8B and the printing device 14 using the profile generation section 74, then generates the adjustment data for making each of the image display device 8A, 8B and the printing device 14 perform the color adjustment based on the profiles thus generated, and then outputs the adjustment data thus generated to each of the image display devices 8A, 8B and the printing device 14.

Each of the image display devices 8A, 8B and the printing device 14 is made to perform the color adjustment based on the adjustment data to thereby perform the color matching between the image display devices.

As described above, according to the color management system 1A, the color matching between a plurality of image display devices can be performed. In the color management system 1A according to the present modified example, the relative value of the measurement data with respect to the white color as the reference color is calculated, and the color adjustment is performed on each of the image display devices using the relative value. Therefore, it is possible to match the relative values of other colors with respect to the white color displayed by the image display devices between the image display devices.

It should be noted that in the color management system 1A according to the present modified example, it is also possible to perform the color matching between the image display devices based on the measurement data of the color patterns displayed by the image display devices without using the relative values of the measurement data with respect to the white color as the reference color. In this case, it is possible to match the colors displayed in the respective image display devices.

Although in each of the embodiments and the modified example, the variable wavelength interference filter 5 is used as the spectral filter, the invention is not limited to this configuration. It is also possible to use the spectral filter capable of performing the integral-field spectroscopy such as a liquid crystal tunable filter or an AOTF.

Although in each of the embodiments and the modified example described above, the configuration of disposing the stationary reflecting film 54 as the first reflecting film on the stationary substrate 51 as the first substrate and disposing the movable reflecting film 55 as the second reflecting film on the movable substrate 52 as the second substrate is described as an example of the variable wavelength interference filter 5, the invention is not limited to this configuration. For example, a configuration not provided with the first substrate or the second substrate can also be adopted. In this case, for example, after disposing the first reflecting film on one surface of a parallel glass substrate, and disposing the second reflecting film on the other surface parallel to the one surface, the parallel glass substrate is etched using an etching process or the like. In the present configuration, the first substrate and the second substrate are eliminated, and thus, a thinner spectroscopic element can be obtained. In this case, by making, for example, a spacer intervene between the first reflecting film and the second reflecting film, the gap dimension between the reflecting films can be maintained. Further, by disposing the first electrode on the first reflecting film, disposing the second electrode on the second reflecting film, and applying the drive voltage between the first electrode and the second electrode, the gap dimension between the reflecting films can be changed.

Although in each of the embodiments and the modified example described above, it is assumed to provide the light source 21, in the case in which the measurement target image X is limited to what is displayed on one of the variety of types of light emitting displays, the light source 21 is not necessarily required to be provided.

Although in each of the embodiments and the modified example described above, it is assumed to provide the telecentric optical system 31, the invention is not limited to this configuration. Any configuration of disposing a light guide optical system capable of guiding the light from the measurement target image to the spectral filter can be adopted, and for example, a configuration of disposing an LCF or the like can also be adopted.

Although in each of the embodiments and the modified example, it is explained that the four color patterns displayed sequentially are measured, the invention is not limited to this configuration, but it is also possible to arrange that three or less, or five or more color patterns are measured.

Although in each of the embodiments and the modified example, the configuration having the pressure-contact section 25 formed of an elastic member is described, the invention is not limited to this configuration. In other words, the pressure-contact section 25 can also be formed of a hard member not elastically deformed. Thus, when the pressure-contact section 25 is pressed against the display section 82 of the image display device 8 or the printed matter on which the measurement target image X is printed, the pressure-contact section 25 does not deform, and it becomes easy to fix the spectroscopic measurement device 2 to the display section 82 or the printed matter and so on. Therefore, by configuring the contact surface of the pressure-contact section 25 having contact with the display section 82 or the printed matter and so on so that the spectroscopic measurement device 2 has a desired relative angle with the display section 82 or the printed matter (e.g., so that the spectroscopic measurement device 2 is perpendicular to the optical axis of the telecentric optical system 31), it becomes easy to maintain the relative angle described above at the desired angle or within an allowable range as the relative angle, and thus, the colorimetric accuracy can further be improved.

Although in each of the embodiments and the modified example described above, the case in which the display positions of the color patches 101 are translated symmetrically is explained, the invention is not limited to this configuration, but it is also possible to arrange that the display positions are changed in a random manner.

Although in the second embodiment described above, the case in which the colors of the color patches included in the color patterns 10E, 10F and the colors of the color patches included in the color patterns 10G, 10H are different from each other is explained, in the invention, it is also possible to arrange that the colors of the color patches are different between the color patterns 10E, 10F, 10G, and 10H, and in this case, a larger number of colors of color patches can be measured, and the colorimetric accuracy can further be improved.

Although in each of the embodiments and the modified example, the reference color image with the reference color is displayed as the identification image 9, the invention is not limited to this configuration. In other words, any image with which the spectroscopic measurement device 2 is instructed to start the measurement can be used as the identification image 9, and specifically, any image emitting the light including the wavelength (a preset wavelength), which can be transmitted through the variable wavelength interference filter 5 in the standby state of the spectroscopic measurement device 2, can be adopted. Further, although it is assumed that the image for displaying the reference color in the entire area of the display area Ard is displayed for a predetermined period of time as the identification image 9, it is also possible to intermittently display (blink) the image for emitting the light including the preset wavelength, or to display the image at a predetermined pattern.

It should be noted that in the first embodiment described above, in the case in which the reference color image is not displayed as the identification image 9, it is also possible to separately display and then measure the reference color image for obtaining the reference color data. In this case, a reference color detection section as a reference color image detection unit for detecting the reference color image is provided to the circuit board 6 separately from the trigger detection section 64 for detecting the identification image 9, to thereby detect that the reference color image is displayed, and then obtain the reference color data.

Although in each of the embodiments and the modified example described above, the profile-generating data having the relative value associated with the measurement data is output, the invention is not limited to this configuration, but it is also possible to output only the measurement data based on the color patches as the profile-generating data. In this case, it is not required to provide the position identification section 65 for obtaining the reference color data of the reference color and the relative value acquisition section 66 for obtaining the relative value of the measurement data with respect to the reference color data.

Although in each of the embodiments and the modified example described above, it is assumed that the plurality of marks each having a triangular shape is displayed as the measurement position marks 11 for indicating the arrangement position of the spectroscopic measurement device 2 on the display section 82, the invention is not limited to this configuration. The number and the shapes of the measurement position marks 11 are not particularly limited, and any number and any shapes can be adopted providing the arrangement position of the spectroscopic measurement device 2 can be indicated. Further, if the arrangement position of the spectroscopic measurement device 2 can be specified, it is not necessarily required to display the measurement position marks 11.

Further, although it is assumed that the alignment marks 12 for adjusting the position of the spectroscopic measurement device 2 with respect to the measurement position marks 11 are disposed on the surface of the exterior case 24 of the spectroscopic measurement device 2, it is not necessarily required to provide the alignment marks 12.

Although in each of the embodiments described above, the display section 22 is provided as the informing section for informing of the notification including at least either one of the operation state and the measurement result, the invention is not limited to this configuration. The spectroscopic measurement device 2 can be provided with a sound output section as a notification section, and can be configured to be able to output a notification sound for notifying the user of the beginning of the measurement, the termination of the measurement, and so on. Thus, the user can easily figure out the operation state of the spectroscopic measurement device 2.

Although in each of the embodiments and the modified example, there is explained the case in which the spectroscopic measurement device 2 detects that the identification image 9 is displayed to thereby detect the start of the measurement and the termination of the measurement, and the operation timing of the spectroscopic measurement device 2 and the image display device 8 is not synchronized by the PC 7, the invention is not limited to this configuration. For example, it is possible to adopt a configuration in which the PC controls the operations of the spectroscopic measurement device 2 and the image display device 8 to perform the control such as the synchronization of the operation timing.

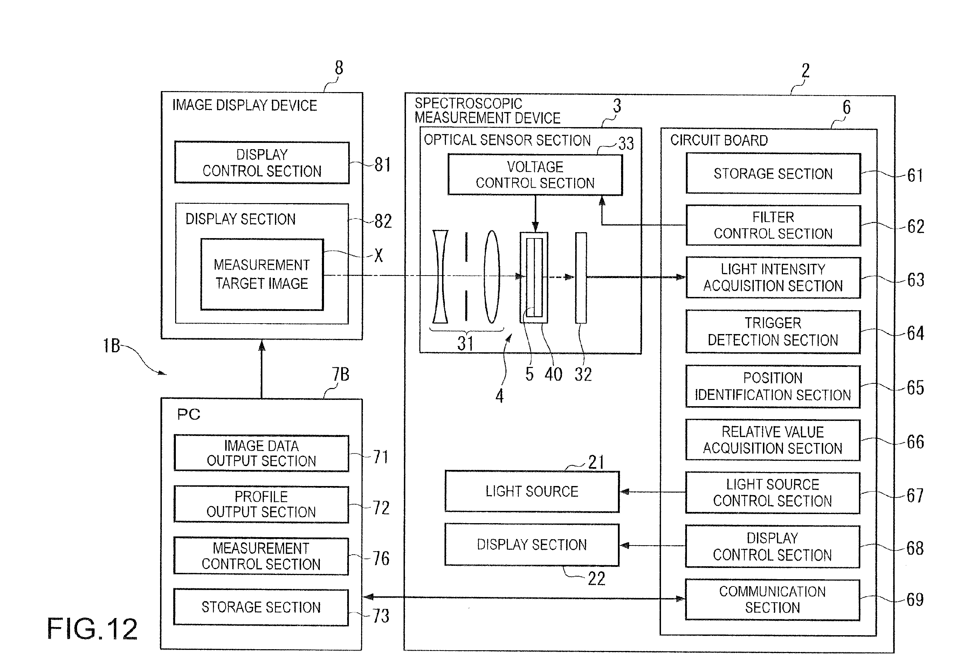

Fig. 12 is a block diagram showing a schematic configuration of a color management system 1B as an example of the color management system according to the invention.

As shown in Fig. 12, the color management system 1B is different from each of the embodiments and the modified example described above in the point that the PC 7B is provided with a measurement control section 76 for controlling the operations of the spectroscopic measurement device 2 and the image display device 8, and has basically a similar configuration to each of the embodiments described above in other points.

The PC 7B is provided with the image data output section 71, the profile output section 72, the storage section 73, and the measurement control section 76.

The measurement control section 76 controls the spectroscopic measurement device 2 and the image display device 8 using a variety of programs, data, and so on stored in the storage section 73.

For example, the measurement control section 76 controls the spectroscopic measurement device 2 and the image display device 8 so as to synchronize the timing for displaying the color patches on the image display device 8 and the measurement start timing of the spectroscopic measurement device 2 with each other.

Further, in the case in which, for example, the image display device 8 is capable of displaying a high-definition image, the measurement control section 76 instructs the spectroscopic measurement device 2 to set the shorter intervals between the measurement wavelengths of the variable wavelength interference filter 5 and drive the variable wavelength interference filter 5 with the wavelength intervals thus set. The filter control section 62 of the spectroscopic measurement device 2 performs the colorimetry on the color patches while changing the measurement wavelength at the wavelength intervals thus set to thereby obtain the measurement data. On this occasion, it is also possible to store the data such as a table having the image display device 8 and the wavelength intervals associated with each other in the storage section 73 in advance, and set the wavelength intervals by looking up the data.

It should be noted that although in each of the embodiments and the modified example, there is adopted the configuration of synchronizing the displaying and changing timing of the color pattern and the measurement timing of the spectroscopic measurement device with each other, the invention is not limited to this configuration. It is also possible to separately measure the color pattern and the reference color image displayed in advance in accordance with the instruction by the user without synchronizing the measurement timing of the spectroscopic measurement device.

Although in each of the embodiments and the modified example described above, the spectroscopic measurement device has the optical sensor section 3, the circuit board 6 for controlling the optical sensor section 3, the display section 22, and the battery 23 configured integrally with the exterior case 24, the invention is not limited to this configuration, but it is also possible to configure these constituents separately.

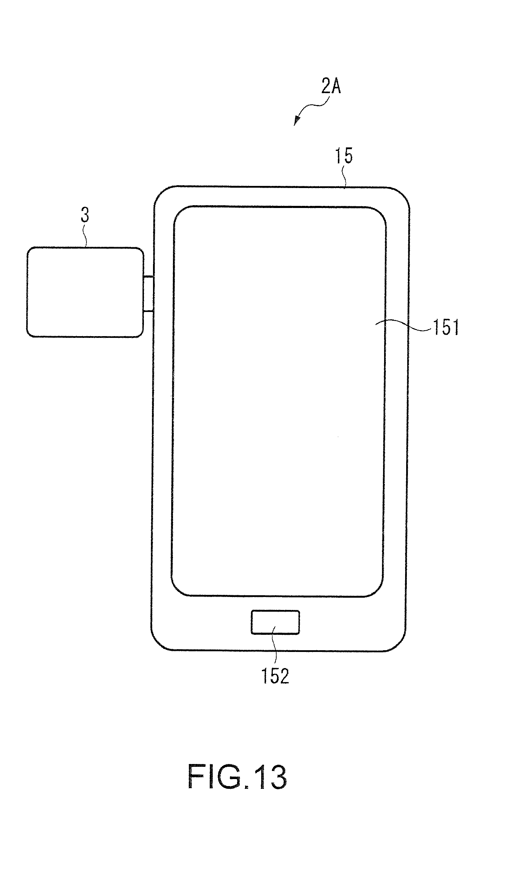

Fig. 13 is a diagram showing a modified example of the spectroscopic measurement device according to the invention.

As shown in Fig. 13, the spectroscopic measurement device 2A is provided with the optical sensor section 3, and a portable terminal 15 to which the optical sensor section 3 is connected so as to be able to communicate via micro USB or the like. Although in each of the embodiments described above, the circuit board 6 provided with the variety of circuits 61 through 69 for controlling the spectroscopic measurement device 2 is disposed inside the exterior case 24 of the spectroscopic measurement device 2, in the spectroscopic measurement device 2A according to the present modified example, the optical sensor section 3 and the portable terminal 15 provided with the control section for controlling the spectroscopic measurement device 2A are configured separately, and are connected so as to be able to communicate with each other. It should be noted that in the present modified example, the optical sensor section 3 is housed in the housing, and the light entrance port provided to the housing is provided with the pressure-contact section 25 described above. Further, the optical sensor section 3 is provided with the light source 21 for illuminating the inside of the pressure-contact section 25.

The portable terminal 15 is a portable terminal such as a smartphone or a tablet terminal. The portable terminal 15 is provided with a display section 151 and an operating section 152. The display section 151 is formed of a touch panel, and the portable terminal 15 controls the optical sensor section 3 in accordance with the input from the touch panel of the display section 151 and the operating section 152. Further, a wireless device not shown is provided, and it is possible to wirelessly communicate with the PC 7, for example, the communication via a LAN or the Internet can be performed.

Here, in the spectroscopic measurement device 2A, the control of the optical sensor section 3 is performed using an operational device, a storage device, and so on provided to the portable terminal 15. Specifically, the drive control of the optical sensor section 3 is performed using a variety of programs, data, and so on stored in advance in the storage device of the portable terminal 15. Further, electrical power is also supplied to the optical sensor section 3 from a power supply provided to the portable terminal 15.

By independently configuring the optical sensor section 3, and performing the control of the optical sensor section 3 using the portable terminal 15, the spectroscopic measurement device 2A can be configured only by manufacturing the optical sensor section 3 connectable to the portable terminal 15, and providing the portable terminal 15 with the program and so on for controlling the optical sensor section 3. Therefore, there is no need to incorporate the components such as a variety of control circuits, a battery, and a display section into the optical sensor section 3 in order to provide the spectroscopic measurement device 2A, and therefore, the manufacturing cost can further be reduced. Further, since the optical sensor section 3 can be detached when the spectroscopic measurement device is not used, the spectroscopic measurement device can practically be miniaturized to a large extent.

It should be noted that it is also possible to make the portable terminal 15 function as the profile generation device according to the invention.

Further, although in the modified example described above, it is assumed that the variety of circuits 61 through 69 are realized by the portable terminal 15, the invention is not limited to this configuration. For example, it is also possible that the display section 151 and the power supply of the portable terminal 15 are used as the display section and the power supply, and the circuits necessary for driving the optical sensor section 3 are disposed integrally with the optical sensor section 3.

Besides the above, specific structures to be adopted when putting the invention into practice can be configured by arbitrarily combining the embodiments and the modified examples described above, or can arbitrarily be replaced with other structures and so on within the range in which the advantages of the invention can be achieved.

## Claims

1. A spectroscopic measurement device comprising:
a spectral filter adapted to disperse incident light to select light with a predetermined wavelength, and capable of changing the wavelength of the light to be selected;
an imaging section adapted to image the light dispersed by the spectral filter to obtain a spectral image; and
a data output section adapted to output profile-generating data used to generate a profile of an image output device,
wherein in a case in which the imaging section obtains a plurality of spectral images with respect to a color pattern including a plurality of colors of color patches output from the image output device, the data output section outputs measurement data, which includes light intensity in each pixel of each of the spectral images and a coordinate value of the pixel associated with each other, as the profile-generating data.

2. The spectroscopic measurement device according to Claim 1, wherein
the spectral filter is a variable wavelength interference filter including
a first reflecting film adapted to reflect a part of the incident light and transmit a part of the incident light, and
a second reflecting film disposed so as to be opposed to the first reflecting film, and adapted to reflect a part of the incident light and transmit a part of the incident light, and
adapted to make the incident light between the first reflecting film and the second reflecting film interfere with each other to take out the light with a specified wavelength.

3. The spectroscopic measurement device according to Claim 2, wherein
the variable wavelength interference filter includes
a first substrate provided with the first reflecting film,
a second substrate opposed to the first substrate, and provided with the second reflecting film, and
a gap changing section adapted to change a gap dimension between the first reflecting film and the second reflecting film.

4. The spectroscopic measurement device according to Claim 1, wherein
the spectral filter includes
a first substrate,
a second substrate opposed to the first substrate, a first reflecting film provided to the first substrate, and adapted to reflect a part of the incident light and transmit a part of the incident light,
a second reflecting film provided to the second substrate, opposed to the first reflecting film, and adapted to reflect a part of the incident light and transmit a part of the incident light, and
a gap changing section adapted to deflect the second substrate toward the first substrate by applying a voltage to thereby change a gap dimension between the first reflecting film and the second reflecting film.

5. The spectroscopic measurement device according to any one of the preceding Claims, further comprising:
an incident light acquisition section adapted to take in the incident light; and
a pressure-contact section disposed so as to surround the incident light acquisition section, and adapted to block outside light when pressed against a display surface on which the color pattern is displayed.

6. The spectroscopic measurement device according to Claim 5, further comprising:
a light source disposed inside the pressure-contact section, and adapted to emit light to the display surface.

7. The spectroscopic measurement device according to any one of the preceding Claims, further comprising:
a telecentric optical system adapted to guide the incident light to the spectral filter, and/or
an informing section adapted to inform of a notice including at least either one of an operation state and a measurement result.

8. The spectroscopic measurement device according to any one of the preceding Claims, wherein
the imaging section is adapted to image each of the color patches with a plurality of pixels.

9. A color management system comprising:
the spectroscopic measurement device according to any one of the preceding Claims; and
a profile generation device having a profile generation section adapted to generate a profile of the image output device using the profile-generating data output from the spectroscopic measurement device.

10. The color management system according to Claim 9,
wherein
the profile generation device includes a pattern output unit adapted to make the image output device output the color pattern, and
the pattern output unit is adapted to make the image output device output the color pattern having the color patches each having a predetermined size arranged in a matrix.

11. The color management system according to Claim 10,
wherein
the pattern output unit is adapted to make the image output device output the color pattern in which a reference color is displayed between the plurality of color patches, and
the spectroscopic measurement device is adapted to identify a pixel position of the reference color of the spectral image and a pixel position of the color patch, and to output the profile-generating data taking the measurement data at the pixel position of the reference color identified as a reference.

12. The color management system according to Claim 10 or 11, wherein
the pattern output unit is adapted to make the image output device output the color pattern having a black line disposed between the color patches.

13. The color management system according to any one of Claims 10 to 12, wherein
the pattern output unit is adapted to make the image output device display a reference color image having the reference color disposed in an entire display area of the color pattern before outputting the color pattern, and
the spectroscopic measurement device is adapted to output the profile-generating data taking the measurement data of the reference color image as a reference.

14. The color management system according to Claim 13,
wherein
the spectroscopic measurement device includes a reference color image detection unit adapted to detect the reference color image, and is adapted to start measurement taking a fact that the reference color image is detected as a trigger.

15. The color management system according to any one of Claims 10 to 14, wherein
the pattern output unit is adapted to make the image output device display an identification image adapted to instruct to start measurement in the spectroscopic measurement device before outputting the color pattern, and
the spectroscopic measurement device includes an identification image detection unit adapted to detect the identification image, and is adapted to start measurement taking a fact that the identification image is detected as a trigger.

16. The color management system according to any one of Claims 10 to 15, wherein
the pattern output unit is adapted to make the image output device output an indication image adapted to indicate an arrangement position of the spectroscopic measurement device, and/or
the pattern output unit is adapted to make the image output device sequentially output a plurality of color patterns different in arrangement positions of the color patches from each other, and/or
the pattern output unit is adapted to make the image output device sequentially output a plurality of color patterns different in colors of the color patches from each other.

17. A method of generating a profile in a color management system, the method comprising:
providing the color management system with a spectroscopic measurement device and a profile generation device, the spectroscopic measurement device including a spectral filter adapted to disperse incident light to select light with a predetermined wavelength, and capable of changing the wavelength of the light to be selected, and an imaging section adapted to image the light dispersed by the spectral filter to obtain a spectral image, and the profile generation device generating the profile of an image output device;
imaging, by the imaging section, a color pattern including a plurality of colors of color patches output from the image output device while changing the wavelength of the light to be selected by the spectral filter, to thereby obtain a plurality of spectral images with respective wavelengths;
outputting measurement data, which includes light intensity in each pixel of each of the spectral images and a coordinate value of the pixel associated with each other, as profile-generating data; and
generating the profile of the image output device using the profile-generating data.
